(19) Europäisches Patentamt European Patent Office Office européen des brevets

(11) **EP 4 488 300 A1**

(12) **EUROPEAN PATENT APPLICATION**
published in accordance with Art. 153(4) EPC

(43) Date of publication:
**08.01.2025 Bulletin 2025/02**

(21) Application number: 23760083.8

(22) Date of filing: **24.02.2023**

(51) International Patent Classification (IPC):
**C08F 12/00** (2006.01)   **C08F 212/00** (2006.01)
**B01J 13/02** (2006.01)

(52) Cooperative Patent Classification (CPC):
**B01J 13/02; C08F 12/00; C08F 212/00**

(86) International application number:
**PCT/JP2023/006624**

(87) International publication number:
**WO 2023/163084 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029545**

(71) Applicant: **Zeon Corporation Tokyo 100-8246 (JP)**

(72) Inventors:
• **YAGYU, Sakyo Tokyo 100-8246 (JP)**
• **MORIMURA, Miki Tokyo 100-8246 (JP)**

(74) Representative: **Kraus & Lederer PartGmbB Thomas-Wimmer-Ring 15 80539 München (DE)**

(54) **HOLLOW PARTICLES, RESIN COMPOSITION, AND RESIN MOLDED BODY**

(57) To provide hollow particles from which a hydrophobic solvent included therein can be removed at low temperature. Hollow particles which comprise a shell containing a resin and a hollow portion surrounded by the shell, wherein a volume average particle diameter Dv is 1.0 um or more and 30.0 um or less; wherein the hollow particles have only one hollow portion in an interior thereof; and wherein a ratio (SA(m)/SA(t)) of a measured BET specific surface area SA(m) of the hollow particles to a theoretical BET specific surface area SA(t) calculated from an apparent density $D_1$ of the hollow particles and the volume average particle diameter Dv, is 3.0 or more.

**EP 4 488 300 A1**

**Description**

Technical Field

The disclosure relates to hollow particles, a resin composition comprising the hollow particles, and a resin molded body comprising the same.

Background Art

Hollow particles (hollow resin particles) have a hollow in their interior. Accordingly, they are added and used in resins, coating materials, various kinds of molded bodies and so on, for the purpose of weight reduction, heat insulation, a decrease in permittivity, etc. Their application covers a wide range of fields, such as automobiles, bicycles, aviation, electric, electronics, architecture, household appliances, containers, stationery products, tools and footwear.
For example, Patent Document 1 discloses such hollow particles, that the average particle diameter is from 10 to 150 nm; the gel fraction is 95% or more; and the shell contains an organic-inorganic hybrid vinyl-based resin containing a silicon component.
Patent Document 2 discloses hollow polymer particles comprising a polymer, which contains a vinylic monomer unit and a phosphate ester monomer unit, and having a volume average particle diameter of from 0.5 $\mu$m to 1000 $\mu$m.

Citation List

Patent Documents

Patent Document 1: Japanese Patent Application Laid-Open (JP-A) No. 2017-66351
Patent Document 2: International Publication No. WO2020/054816

Summary of Invention

Technical Problem

The hollow particles disclosed in Patent Document 1 are obtained by the emulsion polymerization method. The hollow particles disclosed in Patent Document 2 are obtained by the suspension polymerization method. In these methods, generally, hollow particles are obtained through the steps of incorporating a non-reactive hydrophobic solvent in the interior of the particles and then removing the hydrophobic solvent therefrom. The inventors of the present disclosure found that, in the drying step for removing the included hydrophobic solvent from the particles, the shell may deteriorate, and the performance of the hollow particles may worsen. On the other hand, the drying condition that does not deteriorate the shell causes such a problem that large amounts of the hydrophobic solvent remain in the interior of the hollow particles.
An object of the present disclosure is to provide hollow particles from which a hydrophobic solvent included therein can be removed at low temperature.
Another object of the present disclosure is to provide a resin composition and a resin molded body, both of which have improved weight reduction and heat insulation properties by containing the hollow particles.

Solution to Problem

The inventors of the present disclosure found the following: when the ratio of the measured BET specific surface area of the hollow particles to the theoretical BET specific surface area thereof is equal to or more than a specific value, the included hydrophobic solvent can be easily removed from the particles at low temperature; the deterioration of the shell can be suppressed; and the performance of the hollow particles can be improved, therefore.
According to the present disclosure, hollow particles which comprise a shell containing a resin and a hollow portion surrounded by the shell are provided,

wherein a volume average particle diameter Dv is 1.0 um or more and 30.0 um or less;
wherein the hollow particles have only one hollow portion in an interior thereof; and
wherein a ratio (SA(m)/SA(t)) of a measured BET specific surface area SA(m) of the hollow particles to a theoretical BET specific surface area SA(t) calculated from an apparent density $D_1$ of the hollow particles and the volume average particle diameter Dv, is 3.0 or more.

According to the present disclosure, there is further provided a resin composition comprising the hollow particles of the present disclosure and a matrix resin.

According to the present disclosure, there is further provided a resin molded body obtained from the resin composition of the present disclosure.

Advantageous Effects of Invention

The present disclosure as described above provides the hollow particles from which the included hydrophobic solvent can be removed at low temperature.

The present disclosure further provides the resin composition and the resin molded body, both of which have improved weight reduction and heat insulation properties by containing the hollow particles.

Brief Description of Drawing

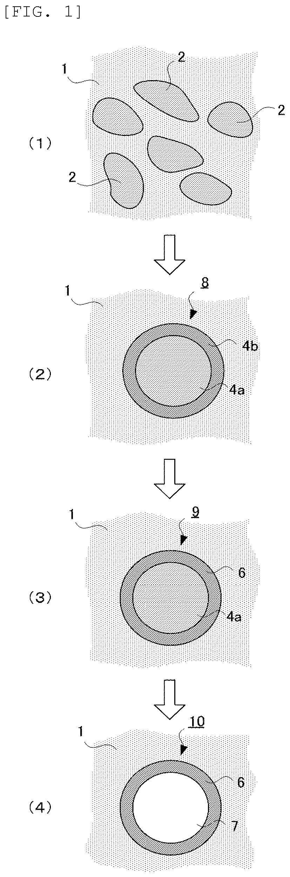

[FIG. 1] A diagram illustrating an example of the method for producing the hollow particles of the present disclosure.

Description of Embodiments

In the present disclosure, "to" which shows a numerical range is used to describe a range in which the numerical values described before and after "to" indicate the lower limit value and the upper limit value.

Also in the present disclosure, (meth)acrylate means each of acrylate and methacrylate; (meth)acryl means each of acryl and methacryl; and (meth)acryloyl means each of acryloyl and methacryloyl.

Also in the present disclosure, the term "polymerizable monomer" means a compound having an addition-polymerizable functional group (in the present disclosure, it may be simply referred to as a "polymerizable functional group"). Also in the present disclosure, as the polymerizable monomer, a compound having an ethylenically unsaturated bond as the addition-polymerizable functional group, is generally used.

In the present disclosure, a polymerizable monomer which has only one polymerizable functional group is referred to as a non-crosslinkable monomer, and a polymerizable monomer which has two or more polymerizable functional groups is referred to as a crosslinkable monomer. The crosslinkable monomer is a polymerizable monomer which forms crosslinking in resin by polymerization reaction.

1. Hollow particles

The hollow particles of the present disclosure are hollow particles which comprise a shell containing a resin and a hollow portion surrounded by the shell,

wherein a volume average particle diameter Dv is 1.0 um or more and 30.0 um or less;
wherein the hollow particles have only one hollow portion in an interior thereof; and
wherein a ratio (SA(m)/SA(t)) of a measured BET specific surface area SA(m) of the hollow particles to a theoretical BET specific surface area SA(t) calculated from an apparent density $D_1$ of the hollow particles and the volume average particle diameter Dv, is 3.0 or more.

The hollow particles of the present disclosure are particles which comprise a resin-containing shell (outer shell) and only one hollow portion surrounded by the shell. The hollow particles of the present disclosure may contain, as impurities, small amounts of hollow particles which have two or more hollow portions or which have no hollow portion. In the hollow particles of the present disclosure, the percentage of the number of the particles having only one hollow portion is preferably 90% or more, and it is more preferably 95% or more.

In the present disclosure, the term "hollow portion" means a hollow space clearly distinguished from the shell of hollow particles formed from a resin material. The shell of the hollow particles may have a porous structure. In this case, the hollow portion has a size that is clearly distinguishable from many minute spaces uniformly dispersed in the porous structure.

The hollow portion of the hollow particles can be determined by, for example, SEM observation of a cross section of the particles or TEM observation of the particles as they are.

Also, the hollow portion of the hollow particles of the present disclosure may be filled with gas such as air, may be in a vacuum or reduced pressure state, or may contain a solvent. For example, when the hollow particles of the present disclosure are used as an additive, from the viewpoint of obtaining the effects such as weight reduction by the hollow particles, the hollow portion is preferably filled with gas.

In conventional hollow particles, a hydrophobic solvent included in the particles during the production process is likely to remain. For sufficient removal of the hydrophobic solvent, for example, drying in a high temperature condition such as 200°C or more, is necessary. Accordingly, there is the following problem: in the drying step for removing the included hydrophobic solvent from the particles, the shell of the hollow particles deteriorates and, as a result, the performance of the hollow particles worsens, such as pressure resistance and dielectric property. In the drying condition that does not deteriorate the shell, large amounts of the hydrophobic solvent remain in the interior of the hollow particles. The composition containing hollow particles in which large amounts of the hydrophobic solvent remain, may cause defoaming or ignition since, when the composition is kneaded or mixed, the hydrophobic solvent remaining in the hollow particles volatilizes. In addition, there is another problem: since the specific gravity of the hollow particles in which the amount of the residual hydrophobic solvent is large, is heavier than the specific gravity of the hollow particles in which the amount of the residual hydrophobic solvent is small, the effects such as weight reduction are poor in the hollow particles in which the amount of the residual hydrophobic solvent is large.

Meanwhile, in the hollow particles of the present disclosure, the ratio (SA(m)/SA(t)) of the measured BET specific surface area SA(m) to the theoretical BET specific surface area SA(t) is 3.0 or more; therefore, the included hydrophobic solvent can be easily removed from the particles even in the condition that does not deteriorate the shell, such as a low temperature condition of 100°C or less (preferably 50°C or less). The SA(m)/SA(t) ratio can be used as an index of the porosity of the shell. As the value of the SA(m)/SA(t) ratio increases, the number of the fine pores present in the shell increases. In the hollow particles of the present disclosure, since the SA(m)/SA(t) ratio is 3.0 or more, the porosity of the shell is sufficiently high; the hydrophobic solvent can easily permeate the shell; and the included hydrophobic solvent can be easily removed from the particles even by drying at low temperature, therefore. From the hollow particles of the present disclosure, the hydrophobic solvent which is included in the particles in the production process can be easily removed in the condition that does not deteriorate the shell. Accordingly, the hollow particles of the present disclosure can be hollow particles in which the deterioration of the shell is suppressed and in which the amount of the residual hydrophobic solvent is small.

Patent Document 1 describes that it may be impossible to obtain desired properties such as light scattering, weight reduction, heat insulation and light reflectivity, when the ratio of the BET specific surface area of the hollow particles to the theoretical specific surface area thereof is larger than 2.5. However, compared to the hollow particles of Patent Document 1 which have an average particle diameter of from 10 nm to 150 nm, the hollow particles of the present disclosure have a volume average particle diameter of 1.0 μm or more and 30.0 μm or less, and they are largely different in particle diameter. Since the volume average particle diameter is 1.0 um or more and 30.0 um or less, the hollow particles of the present disclosure have a sufficient shell thickness. Accordingly, even though the SA(m)/SA(t) ratio is 3.0 or more, the hollow particles of the present disclosure can exert excellent effects (such as weight reduction) when added to various kinds of molded bodies.

Patent Document 2 discloses porous particles such that the SA(m)/SA(t) ratio is 3.0 or more. However, the porous particles have the following problem: compared to hollow particles having only one hollow portion in the interior, when the porous particles are added to a resin molded body of curable resin or the like, the resin can easily penetrate the porous particles, and the proportion of an air layer in the interior of the porous particles is decreased; therefore, the effects exerted by the addition of the porous particles, such as dielectric reduction, heat insulation and weight reduction, cannot be sufficiently obtained. This is due to the following reason: as the proportion of the air layer in the interior of the hollow particles decreases, the relative permittivity and dielectric dissipation factor of the hollow particles increase; the thermal conductivity increases; and the specific gravity increases. Since the hollow particles of the present disclosure have only one hollow portion in the interior, they are free of the above-described problems with the porous particles.

Also in the present disclosure, "excellent in dielectric property" means low relative permittivity and dielectric dissipation factor, and lower relative permittivity and dielectric dissipation factor means better dielectric property.

In the present disclosure, the theoretical BET specific surface area SA(t) of the hollow particles is calculated by the following formula (A) from the apparent density $D_1$ and volume average particle diameter Dv of the hollow particles.

$$SA(t) = 6/(Dv \times D_1) \quad Formula \ (A)$$

The methods for obtaining the apparent density $D_1$ and volume average particle diameter Dv of the hollow particles will be described later in detail.

In the present disclosure, the measured BET specific surface area SA(m) of the hollow particles is measured by the nitrogen adsorption method (BET method) using a BET specific surface area analyzer (such as MACSORB HM MODEL-1208 (product name) manufactured by Mountech Co., Ltd.) As the number of the fine pores present in the shell increases, nitrogen gas can more easily permeate the shell and, as a result, the ratio of the measured BET specific surface area SA(m) to the theoretical BET specific surface area SA(t) increases.

In the hollow particles of the present disclosure, the ratio (SA(m)/SA(t)) of the measured BET specific surface area SA(m) to the theoretical BET specific surface area SA(t) is 3.0 or more. From the viewpoint of removing the hydrophobic solvent from the particles more easily, the SA(m)/SA(t) ratio of the hollow particles of the present disclosure is preferably 3.5 or more, more preferably 4.0 or more, and still more preferably 4.5 or more. The upper limit of the SA(m)/SA(t) ratio of the hollow particles of the present disclosure is not particularly limited. From the viewpoint of ease of production, the upper limit is preferably 100 or less, more preferably 80 or less, and still more preferably 70 or less.

The hollow particles that the SA(m)/SA(t) ratio is within the above range, can be obtained by, for example, appropriately selecting the type of the polymerizable monomer and hydrophobic solvent used in the production of the hollow particles, and controlling the void ratio of the hollow particles to 50% or more. More specifically, it is effective to use a preferred combination of the polymerizable monomer and the hydrophobic solvent and control the amount of the added hydrophobic solvent so as to obtain a void ratio of 50% or more, in the below-described method for producing the hollow particles of the present disclosure.

The theoretical BET specific surface area SA(t) of the hollow particles of the present disclosure is not particularly limited. The theoretical BET specific surface area SA(t) is preferably 0.50 or more, and more preferably 1.00 or more. On the other hand, it is preferably 12.00 or less, more preferably 10.00 or less, and still more preferably 8.00 or less.

The measured BET specific surface area SA(m) of the hollow particles of the present disclosure is not particularly limited. The measured BET specific surface area SA(m) is preferably 2.00 or more, and more preferably 5.00 or more. On the other hand, it is preferably 500 or less, and more preferably 400 or less.

The void ratio of the hollow particles of the present disclosure is preferably 50% or more, more preferably 60% or more, and still more preferably 65% or more. When the void ratio is equal to or more than the lower limit value, the SA(m)/SA(t) ratio of the hollow particles is likely to be 3.0 or more, and the hollow particles become particles that have excellent effects such as dielectric reduction, heat insulation and weight reduction.

The upper limit of the void ratio of the hollow particles is not particularly limited. From the viewpoint of suppressing a decrease in the pressure resistance of the hollow particles, the upper limit is preferably 90% or less, more preferably 85% or less, and still more preferably 80% or less.

The void ratio of the hollow particles can be calculated from the apparent density $D_1$ and true density $D_0$ of the hollow particles.

A method for measuring the apparent density $D_1$ of the hollow particles is as follows. First, approximately 30 $cm^3$ of the hollow particles are introduced into a measuring flask with a volume of 100 $cm^3$, and the mass of the introduced hollow particles is precisely weighed. Next, the measuring flask in which the hollow particles are introduced, is precisely filled with isopropanol up to the marked line while care is taken so that air bubbles do not get in. The mass of the isopropanol added to the measuring flask is precisely weighed, and the apparent density $D_1$ ($g/cm^3$) of the hollow particles is calculated by the following formula (I).

Apparent density $D_1$ = [Mass of the hollow particles]/(100-[Mass of the isopropanol]/[Specific gravity of the isopropanol at the measuring temperature])        Formula (I)

The apparent density $D_1$ is equivalent to the specific gravity of the whole hollow particle in the case where the hollow portion is regarded as a part of the hollow particle.

A method for measuring the true density $D_0$ of the hollow particles is as follows. The hollow particles are pulverized in advance; approximately 10 g of the pulverized hollow particles are introduced into a measuring flask with a volume of 100 $cm^3$; and the mass of the introduced pulverized particles is precisely weighed. After that, similarly to the measurement of the apparent density mentioned above, isopropanol is added to the measuring flask; the mass of the isopropanol is precisely weighed; and the true density $D_0$ ($g/cm^3$) of the hollow particles is calculated by the following formula (II).

True density $D_0$ = [Mass of the pulverized hollow particles]/(100-[Mass of the isopropanol]/[Specific gravity of the isopropanol at the measuring temperature])        Formula (II)

The true density $D_0$ is equivalent to the specific gravity of the shell portion alone of the hollow particle. As is clear from the measurement method mentioned above, when calculating the true density $D_0$, the hollow portion is not regarded as a part of the hollow particle.

The void ratio (%) of the hollow particles is calculated by the following formula (III) from the apparent density $D_1$ and the true density $D_0$.

Void ratio (%) = 100-(Apparent density $D_1$/True density $D_0$) $\times$ 100        Formula (III)

In the present disclosure, the volume average particle diameter of the hollow particles is 1.0 $\mu$m or more and 30.0

μm or less. The lower limit of the volume average particle diameter of the hollow particles is preferably 1.5 μm or more, and more preferably 2.0 μm or more. On the other hand, the upper limit of the volume average particle diameter of the hollow particles is preferably 20.0 μm or less, and more preferably 10.0 μm or less. When the volume average particle diameter of the hollow particles is equal to or more than the lower limit value, both a high void ratio and excellent pressure resistance are easily obtained; the aggregability of the hollow particles decreases; and the hollow particles exert excellent dispersibility, accordingly. When the volume average particle diameter of the hollow particles is equal to or less than the upper limit value, the uniformity of the shell is easily improved, and the hollow particles excellent in pressure resistance are easily obtained, accordingly.

The particle diameter of the hollow particles of the present disclosure can be controlled by, for example, the content of the dispersion stabilizer with respect to the total mass of the polymerizable monomer and the hydrophobic solvent.

The particle size distribution (volume average particle diameter (Dv)/number average particle diameter (Dn) of the hollow particles may be 1.1 or more and 2.5 or less, for example. When the particle size distribution is 2.5 or less, hollow particles such that compressive strength and heat resistance slightly vary between the hollow particles, can be obtained. Also when the particle size distribution is 2.5 or less, a product having uniform thickness can be produced in the case of producing, for example, a sheet-shaped molded body mixed with the hollow particles of the present disclosure.

The volume average particle diameter (Dv) and number average particle diameter (Dn) of the hollow particles can be found as follows, for example. The particle diameter of each of the hollow particles is measured with a particle size distribution measuring apparatus; the number average and volume average of the particle diameters are calculated; and the obtained values can be used as the number average particle diameter (Dn) and volume average particle diameter (Dv) of the hollow particles. The particle size distribution is found by dividing the volume average particle diameter by the number average particle diameter.

The shape of the hollow particles of the present disclosure is not particularly limited, as long as the hollow particles have only one hollow portion in the interior. As the shape, examples include, but are not limited to, a spherical shape, an ellipsoidal shape and an irregular shape. Among them, a spherical shape is preferable in terms of ease of production, pressure resistance and so on.

The average circularity of the hollow particles of the present disclosure may be from 0.950 to 0.995.

An example of the image of the shape of the hollow particles of the present disclosure, is a bag made of a thin film and inflated with gas. A cross-section thereof is like the hollow particle 10 shown in the diagram (4) of FIG. 1 described later.

The shape of the particles can be determined by SEM or TEM, for example.

In the hollow particles of the present disclosure, from the viewpoint of pressure resistance, the percentage of particles having a circularity of 0.85 or less is preferably small. The particles having a circularity of 0.85 or less are typically cracked particles or deformed particles such as dented particles. In the present disclosure, such particles may be referred to as "irregular-shaped particles". Such irregular-shaped particles are poor in pressure resistance compared to spherical particles, since external pressure is likely to be locally applied thereto. In addition, the irregular-shaped particles have the following problem: compared to spherical particles, the irregular-shaped particles are poor in dispersibility since they are likely to aggregate when dispersed in the matrix resin. When the irregular-shaped particles are dispersed in the matrix resin, aggregates are likely to be formed; external pressure is likely to be applied to the aggregates; and the pressure resistance further deteriorates, accordingly. Therefore, the dispersibility and pressure resistance of the hollow particles can be improved by decreasing the percentage of the irregular-shaped particles included in the hollow particles.

The hollow particles of the present disclosure may contain, as impurities, small amounts of particles having a low circularity, such as cracked or deformed particles. In 100% by mass of the hollow particles of the present disclosure, the percentage of the particles having a circularity of 0.85 or less is preferably 10% by mass or less, more preferably 7% by mass or less, still more preferably 5% by mass or less, even more preferably 4% by mass or less, and particularly preferably 3% by mass or less.

The term "circularity" is defined as a value obtained by dividing the equivalent circular area diameter which is the diameter of a circle having the same area as the projected image of a particle, by the equivalent circular perimeter diameter which is the diameter of a circle having the same perimeter as the projected image of the particle. The circularity is 1 when the hollow particles are perfectly spherical, and it gets smaller as the surface shape of the hollow particles becomes more complex.

In the present disclosure, the circularity is measured by use of a flow particle image analyzer at an image resolution of 0.185 um/pixel.

As the flow particle image analyzer, for example, IF-3200 (product name, manufactured by JASCO International Co., Ltd.) is preferably used. The measurement sample is prepared by, for example, performing a dispersion treatment of a mixture liquid, which is obtained by adding 0.10 g to 0.12 g of the hollow particles to an aqueous solution of linear alkylbenzene sulfonate (concentration 0.3%), in an ultrasonic cleaner for 5 minutes.

The average circularity is the average of the circularities of randomly selected 1000 to 3000 particles.

The thermal decomposition initiation temperature of the hollow particles of the present disclosure is preferably from 150°C to 400°C, and more preferably from 200°C to 350°C. When the thermal decomposition initiation temperature is in the range, the hollow particles are excellent in heat resistance.

In the present disclosure, the thermal decomposition initiation temperature of the hollow particles can be measured as a 5% weight reduction temperature, using a TG-DTA device in an air atmosphere, in the conditions of an air flow rate of 230 mL/min and a temperature increase rate of 10°C/min.

In the hollow particles of the present disclosure, the shell contains a polymer as the resin. The polymer is typically a polymer of a polymerizable monomer used by the hollow particle production method of the present disclosure described later. The hollow particles of the present disclosure contain the polymer as the main component of the shell, and the polymer forms the skeleton of the shell of the hollow particles. Details of the polymerizable monomer used for the synthesis of the polymer are as described in the hollow particle production method of the present disclosure described later.

The polymer contained in the shell is not particularly limited. The polymer preferably contains a hydrocarbon monomer unit at a content of 10 parts by mass or more in 100 parts by mass of all monomer units. The polymer more preferably contains a monomer unit derived from a hydrocarbon monomer having a specific gravity of $1.18\,g/cm^3$ or less at a content of 10 parts by mass or more. Accordingly, the SA(m)/SA(t) ratio of the hollow particles is likely to be 3.0 or more. In the present disclosure, the hydrocarbon monomer having a specific gravity of $1.18\,g/cm^3$ or less may be referred to as a "low-specific-gravity hydrocarbon monomer", and a monomer unit derived from the low-specific-gravity hydrocarbon monomer may be referred to as a "low-specific-gravity hydrocarbon monomer unit". The low-specific-gravity hydrocarbon monomer is preferably a hydrocarbon monomer having a specific gravity of $1.00\,g/cm^3$ or less.

The polymer containing the hydrocarbon monomer unit at a content of 10 parts by mass or more, is likely to finely precipitate when synthesized by the suspension polymerization method. Accordingly, the shell containing the polymer is formed by aligned fine polymer particles. It is thus presumed that since the shell, which contains the polymer containing the hydrocarbon monomer unit at a content of 10 parts by mass or more, has decreased specific gravity and increased gas permeability, the SA(m)/SA(t) ratio of the hollow particles is likely to be 3.0 or more.

From the viewpoint of controlling the SA(m)/SA(t) ratio of the hollow particles to 3.0 or more, the content of the hydrocarbon monomer unit or the content of the low-specific-gravity hydrocarbon monomer unit may be 10 parts by mass or more and 100 parts by mass or less, in 100 parts by mass of all monomer units.

In the present disclosure, "hydrocarbon monomer" is a polymerizable monomer composed of the elements carbon and hydrogen; a crosslinkable monomer composed of the elements carbon and hydrogen is referred to as "crosslinkable hydrocarbon monomer"; and a non-crosslinkable monomer composed of the elements carbon and hydrogen is referred to as "non-crosslinkable hydrocarbon monomer".

The polymer contained in the hollow particles of the present disclosure may be composed of hydrocarbon or may contain a heteroatom. As the heteroatom, examples include, but are not limited to, an oxygen atom, a nitrogen atom and a sulfur atom. When the polymer contains a heteroatom, the heteroatom is preferably at least one selected from an oxygen atom and a nitrogen atom. Accordingly, the SA(m)/SA(t) ratio of the hollow particles is likely to be 3.0 or more.

From the viewpoint of obtaining the hollow particles having a SA(m)/SA(t) ratio of 3.0 or more and only one hollow portion, the content of the monomer unit containing a functional group such as a phosphoric acid ester group in the polymer, is preferably 0.1% by mass or less in 100 parts by mass of the polymerizable monomer units. More preferably, the polymer is free of the monomer unit containing a functional group such as a phosphoric acid ester group. When the amount of the functional group is large, the measured BET specific surface area SA(m) of the hollow particles tends to be low, and the SA(m)/SA(t) ratio is less likely to be 3.0 or more.

From the viewpoint of improving the dielectric property of the hollow particles, the content of the hydrocarbon monomer unit in 100 parts by mass of all monomer units of the polymer, is preferably more than 50 parts by mass, more preferably 60 parts by mass or more, still more preferably 70 parts by mass or more, even more preferably 80 parts by mass or more, and particularly preferably 90 parts by mass or more.

The specific gravity of the hydrocarbon monomer unit for improving the dielectric property of the hollow particles is not particularly limited.

When the polymer contains a monomer unit different from the hydrocarbon monomer unit, the content of the hydrocarbon monomer unit may be, for example, 95 parts by mass or less, or it may be 90 parts by mass or less, in 100 parts by mass of all monomer units of the polymer.

In the hollow particles of the present disclosure, the polymer contained in the shell may contain an acrylic monomer unit. Accordingly, the pressure resistance of the hollow particles may be improved. When the polymer contains an acrylic monomer unit, the content of the acrylic monomer unit may be, for example, 10 parts by mass or more in 100 parts by mass of all monomer units of the polymer. From the viewpoint of sufficiently containing the hydrocarbon monomer unit, the content of the acrylic monomer unit is preferably 90 parts by mass or less in 100 parts by mass of all monomer units of the polymer.

In the polymer contained in the shell, the total content of the hydrocarbon monomer unit and acrylic monomer unit is preferably 80 parts by mass or more, more preferably 90 parts by mass or more, still more preferably 98 parts by mass or more, and even more preferably 99 parts by mass or more, in 100 parts by mass of all monomer units.

In the present disclosure, an "acrylic monomer" is a polymerizable monomer containing a (meth)acryloyl group as a polymerizable functional group; a crosslinkable monomer containing a (meth)acryloyl group as a polymerizable functional group is referred to as a "crosslinkable acrylic monomer"; and a non-crosslinkable monomer containing a (meth) acryloyl group as a polymerizable functional group is referred to as a "non-crosslinkable acrylic monomer". In the crosslinkable acrylic monomer, at least one polymerizable functional group is only required to be a (meth)acryloyl group, and all polymerizable functional groups are preferably (meth)acryloyl groups.

In the hollow particles of the present disclosure, from the viewpoint of ease of obtaining the hollow particles which have only one hollow portion and improving the pressure resistance, the polymer contained in the shell preferably contains a crosslinkable monomer unit. In 100 parts by mass of all monomer units of the polymer, the content of the crosslinkable monomer unit is preferably more than 50 parts by mass, more preferably 60 parts by mass or more, still more preferably 70 parts by mass or more, and even more preferably 80 parts by mass or more.

On the other hand, the polymer may contain non-crosslinkable monomer unit to the extent that does not impair the effects of the present disclosure. In this case, in 100 parts by mass of all monomer units of the polymer, the content of the crosslinkable monomer unit may be 98 parts by mass or less, may be 96 parts by mass or less, or may be 90 parts by mass or less, for example.

From the viewpoint of improving the pressure resistance and dielectric property of the hollow particles of the present disclosure, the polymer contained in the shell preferably contains a crosslinkable hydrocarbon monomer unit at a content of more than 50 parts by mass of in 100 parts by mass of all monomer units. The content of the crosslinkable hydrocarbon monomer unit is more preferably 60 parts by mass or more, still more preferably 70 parts by mass or more, even more preferably 80 parts by mass or more, and particularly preferably 90 parts by mass or more, in 100 parts by mass of all monomer units of the polymer. The upper limit of the content of the crosslinkable hydrocarbon monomer unit is not particularly limited. In 100 parts by mass of all monomer units of the polymer, the upper limit may be 98 parts by mass or less, or it may be 96 parts by mass or less, for example.

From the viewpoint of improving the pressure resistance of the hollow particles of the present disclosure, the polymer contained in the shell preferably contains a difunctional crosslinkable monomer unit derived from a difunctional crosslinkable monomer in combination with a trifunctional or higher-functional crosslinkable monomer unit derived from a trifunctional or higher-functional crosslinkable monomer.

In the present disclosure, the crosslinkable monomer unit derived from the difunctional crosslinkable monomer may be referred to as a "difunctional crosslinkable monomer unit", and the crosslinkable monomer unit derived from the trifunctional or higher-functional crosslinkable monomer may be referred to as a "trifunctional or higher-functional crosslinkable monomer unit".

When the polymer contains a difunctional crosslinkable monomer unit and a trifunctional or higher-functional crosslinkable monomer unit, in a total 100 parts by mass of the difunctional crosslinkable monomer unit and the trifunctional or higher-functional crosslinkable monomer unit, the content of the trifunctional or higher-functional crosslinkable monomer unit is preferably 5 parts by mass or more, more preferably 10 parts by mass or more, and still more preferably 20 parts by mass or more. On the other hand, it is preferably 50 parts by mass or less, and more preferably 40 parts by mass or less.

In the hollow particles of the present disclosure, the content of the polymer of the polymerizable monomer, which is used in the method for producing the hollow particles of the present disclosure described later, is preferably 96% by mass or more, and more preferably 97% by mass or more, in the total solid content (100% by mass) of the shell. By adjusting the content of the polymer to equal to or more than the lower limit value, a decrease in the pressure resistance of the hollow particles can be suppressed. That is, from the viewpoint of suppressing a decrease in the pressure resistance of the hollow particles, in the total solid content (100% by mass) of the shell, the content of the components other than the polymer is preferably 4% by mass or less, and more preferably 3% by mass or less.

As the components other than the polymer contained in the hollow particles of the present disclosure, examples include, but are not limited to, a residual unreacted polymerizable monomer, a polymer different from the polymer of the polymerizable monomer, the decomposition product of the polymerization initiator, and a low-molecular compound contained as impurities in the raw materials for the polymerizable monomer.

2. Method for producing the hollow particles

Hereinafter, an example of the method for producing the hollow particles of the present disclosure will be described in detail.

For example, the hollow particles of the present disclosure can be obtained by the hollow particle production method of the present disclosure, the method comprising:

preparing a mixture liquid containing a polymerizable monomer, a hydrophobic solvent, a polymerization initiator, a dispersion stabilizer and an aqueous medium,

suspending the mixture liquid to prepare a suspension in which droplets of a monomer composition containing the polymerizable monomer, the hydrophobic solvent and the polymerization initiator are dispersed in the aqueous medium,

subjecting the suspension to a polymerization reaction to prepare a precursor composition containing precursor particles which have a hollow portion surrounded by a shell containing a resin and which include the hydrophobic solvent in the hollow portion, and

removing the included hydrophobic solvent from the precursor particles.

The production method of the present disclosure follows the following basic technique: by carrying out the suspension treatment of the mixture liquid containing the polymerizable monomer, the hydrophobic solvent, the polymerization initiator, the dispersion stabilizer and the aqueous medium, phase separation occurs between the polymerizable monomer and the hydrophobic solvent. Accordingly, the suspension in which droplets are dispersed in the aqueous medium, the droplets having a distribution structure such that the polymerizable monomer is distributed on the surface side and the hydrophobic solvent is distributed in the center, is prepared. By subjecting the suspension to a polymerization reaction, the surface of the droplets is cured to form the hollow particles having the hollow portion filled with the hydrophobic solvent.

It is presumed that by controlling the composition of the polymerizable monomer, the type of the hydrophobic solvent and so on in the basic technique, the following is achieved: sufficient phase separation between the polymerizable monomer and hydrophobic solvent in the droplets of the monomer composition dispersed in the suspension occurs, and when the suspension is subjected to a polymerization reaction, the polymer of the polymerizable monomer finely deposits and forms the shell, thereby forming the shell with high porosity and obtaining the hollow particles having a SA(m)/SA(t) ratio of 3.0 or more.

The method for producing the hollow particles of the present disclosure includes the steps of preparing the mixture liquid, preparing the suspension, subjecting the suspension to a polymerization reaction, and removing the hydrophobic solvent. The method may further include other steps. As far as technically possible, two or more of the above steps and other additional steps may be simultaneously carried out as one step, or their order may be changed and then they may be carried out in that order. For example, the preparation and suspension of the mixture liquid may be simultaneously carried out in one step (e.g., the mixture liquid may be suspended while adding the materials for the mixture liquid).

A preferred embodiment of the method for producing the hollow particles of the present disclosure may be a production method including the following steps.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium.

(2) Suspension step

The suspension step includes suspending the mixture liquid to prepare the suspension in which the droplets of the monomer composition containing the polymerizable monomer, the hydrophobic solvent and the polymerization initiator are dispersed in the aqueous medium.

(3) Polymerization step

The polymerization step includes subjecting the suspension to a polymerization reaction to prepare the precursor composition containing the precursor particles which have the hollow portion surrounded by the shell containing the resin and which include the hydrophobic solvent in the hollow portion.

(4) Solvent removal step

The solvent removal step includes removing the included hydrophobic solvent from the precursor particles.

In the present disclosure, the hollow particles having the hollow portion filled with the hydrophobic solvent, may be considered as the intermediate of the hollow particles in which the hollow portion is filled with gas, and they may be referred to as the "precursor particles". Also in the present disclosure, the "precursor composition" means a composition containing the precursor particles.

FIG. 1 is a schematic diagram showing an example of the method for producing the hollow particles of the present disclosure. The diagrams (1) to (4) in FIG. 1 correspond to the steps (1) to (4) described above, respectively. White arrows between the diagrams indicate the order of the steps. FIG. 1 is merely a schematic diagram for description, and the production method of the present disclosure is not limited to the method shown in FIG. 1. Further, the structures, dimensions and shapes of materials used for the production method of the present disclosure are not limited to those shown in these diagrams.

The diagram (1) of FIG. 1 is a schematic cross-sectional view showing an embodiment of the mixture liquid in the mixture liquid preparation step. As shown in the diagram, the mixture liquid contains an aqueous medium 1 and a low polarity material 2 dispersed in the aqueous medium 1. Here, the low polarity material 2 means a material that has low polarity and is less likely to mix with the aqueous medium 1. In the present disclosure, the low polarity material 2 contains the polymerizable monomer, the hydrophobic solvent and the polymerization initiator.

The diagram (2) of FIG. 1 is a schematic cross-sectional view showing an embodiment of the suspension in the suspension step. The suspension contains the aqueous medium 1 and droplets 8 of the monomer composition dispersed in the aqueous medium 1. The droplets 8 of the monomer composition contain the polymerizable monomer, the hydrophobic solvent and the polymerization initiator, and their distribution in the droplets is not uniform. The droplets 8 of the monomer composition have the following structure: phase separation occurs between a hydrophobic solvent 4a and a material 4b containing the polymerizable monomer and not containing the hydrophobic solvent; the hydrophobic solvent 4a is distributed in the center; the material 4b not containing the hydrophobic solvent is distributed on the surface side; and the dispersion stabilizer (not shown) is on the surface.

The diagram (3) of FIG. 1 is a schematic cross-sectional view showing an embodiment of the precursor composition obtained by the polymerization step, which contains the precursor particles which include the hydrophobic solvent in the hollow portion. The precursor composition contains the aqueous medium 1 and precursor particles 9 which include the hydrophobic solvent 4a in the hollow portion and which are dispersed in the aqueous medium 1. A shell 6 forming the outer surface of the precursor particles 9 is formed by polymerization of the polymerizable monomer contained in the droplets 8 of the monomer composition. The precursor particles 9 contain, as the resin, the polymer of the polymerizable monomer.

The diagram (4) of FIG. 1 is a schematic cross-sectional view showing an embodiment of the hollow particles after the solvent removal step. The diagram (4) of FIG. 1 shows a state where the hydrophobic solvent 4a has been removed from the state shown in the diagram (3) of FIG. 1. As a result, hollow particles 10 are obtained, in each of which a hollow portion 7 of the shell 6 is filled with gas.

Hereinbelow, the four steps described above and other steps are described in order.

(1) Mixture liquid preparation step

The mixture liquid preparation step includes preparing the mixture liquid containing the polymerizable monomer, the hydrophobic solvent, the polymerization initiator, the dispersion stabilizer and the aqueous medium. The mixture liquid may further contain other materials to the extent that does not impair the effects of the present disclosure.

The materials for the mixture liquid will be described in the following order: (A) the polymerizable monomer, (B) the hydrophobic solvent, (C) the polymerization initiator, (D) the dispersion stabilizer and (E) the aqueous medium.

(A) polymerizable monomer

As the polymerizable monomer, a known polymerizable monomer conventionally used for the formation of hollow particles can be used, without particular limitation. From the point of view that the SA(m)/SA(t) ratio of the hollow particles is likely to be 3.0 or more, the polymerizable monomer preferably contains a hydrocarbon monomer at a content of 10 parts by mass or more in 100 parts by mass of the polymerizable monomer, and it more preferably contains a low-specific-gravity hydrocarbon monomer at a content of 10 parts by mass or more in 100 parts by mass of the polymerizable monomer.

As the low-specific-gravity hydrocarbon monomer, for example, any of the following is preferably used: an aromatic divinyl monomer such as divinylbenzene, divinylbiphenyl and divinylnaphthalene; an aromatic monovinyl monomer such as styrene, vinyl toluene, α-methylstyrene, p-methylstyrene, ethylvinylbenzene, ethylvinylbiphenyl and ethylvinylnaphthalene; a linear or branched diene monomer such as isoprene, butadiene, 2,3-dimethylbutadiene, pentadiene and hexadiene; and an alicyclic olefin such as dicyclopentadiene, cyclopentadiene, ethylidene tetracyclododecene, vinylcyclohexane, norbornene and tricyclododecene. These monomers may be used alone or in combination of two or more. From the point of view that the SA(m)/SA(t) ratio of the hollow particles is likely to be 3.0 or more, at least one selected from divinylbenzene, styrene and ethylvinylbenzene is preferred. Furthermore, from the viewpoint of improving the pressure resistance and dielectric property of the hollow particles, divinylbenzene is more preferred.

From the viewpoint of controlling the SA(m)/SA(t) ratio of the hollow particles to 3.0 or more, the content of the hydrocarbon monomer or the low-specific-gravity may be 10 parts by mass or more and 100 parts by mass or less in 100 parts by mass of the polymerizable monomer.

From the viewpoint of improving the dielectric property of the hollow particles, in 100 parts by mass of the polymerizable monomer, the content of the hydrocarbon monomer is preferably more than 50 parts by mass, more preferably 60 parts by mass or more, still more preferably 70 parts by mass or more, even more preferably 80 parts by mass or more, and particularly preferably 90 parts by mass or more. When a polymerizable monomer different from the hydrocarbon monomer is contained as the polymerizable monomer, in 100 parts by mass of the polymerizable monomer, the content of the hydrocarbon monomer may be 95 parts by mass or less, or it may be 90 parts by mass or less, for example.

The hydrocarbon monomer may be a crosslinkable hydrocarbon monomer or a non-crosslinkable hydrocarbon monomer.

As the crosslinkable hydrocarbon monomer, examples include, but are not limited to, the following difunctional crosslinkable hydrocarbon monomers: an aromatic divinyl monomer such as divinylbenzene, divinylbiphenyl and divinylnaphthalene; a diene monomer such as butadiene, isoprene, 2,3-dimethylbutadiene, pentadiene and hexadiene; and an alicyclic olefin such as dicyclopentadiene and ethylidene tetracyclododecene. In addition, as the crosslinkable hydrocarbon monomer, examples include, but are not limited to, a polymer-type crosslinkable hydrocarbon monomer such as polybutadiene, polyisoprene, SBS (a block copolymer of butadiene and styrene) and SIS (a block copolymer of styrene and isoprene) .

As the non-crosslinkable hydrocarbon monomer, examples include, but are not limited to, an aromatic monovinyl monomer such as styrene, vinyl toluene, $\alpha$-methylstyrene, p-methylstyrene, ethylvinylbenzene, ethylvinylbiphenyl and ethylvinylnaphthalene; a monoolefin monomer such as ethylene, propylene and butylene; and an alicyclic monoolefin such as vinylcyclohexane, norbornene and tricyclododecene.

These monomers may be used alone or in combination of two or more.

From the viewpoint of excellent reactivity, the hydrocarbon monomer is preferably a monomer having a vinyl group as a polymerizable functional group, more preferably an aromatic divinyl or monovinyl monomer, still more preferably at least one selected from divinylbenzene, ethylvinylbenzene and styrene, and even more preferably at least one selected from divinylbenzene and ethylvinylbenzene.

The polymerizable monomer may contain an acrylic monomer. Accordingly, the pressure resistance of the hollow particles may be improved. The acrylic monomer may be a crosslinkable or non-crosslinkable acrylic monomer.

As the crosslinkable acrylic monomer, examples include, but are not limited to, a difunctional crosslinkable acrylic monomer such as allyl (meth)acrylate, vinyl (meth)acrylate, ethylene glycol di(meth)acrylate, diethylene glycol di(meth) acrylate, pentaerythritol di(meth)acrylate, tricyclodecane dimethanol di(meth)acrylate, 2-hydroxy-3-(meth)acryloyloxypropyl (meth)acrylate and both-(meth)acrylic-terminated polyphenylene ether, and a trifunctional or higher-functional crosslinkable acrylic monomer such as trimethylolpropane tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, dipentaerythritol poly(meth)acrylate and ethoxylates thereof.

As the non-crosslinkable acrylic monomer, examples include, but are not limited to, (meth)acrylic acid alkyl ester (e.g., methyl (meth)acrylate, ethyl (meth)acrylate, butyl (meth)acrylate, 2-ethylhexyl (meth)acrylate and lauryl (meth) acrylate), and t-butylaminoethyl (meth)acrylate, glycidyl (meth)acrylate, 2-hydroxyethyl (meth)acrylate, 2-aminoethyl (meth)acrylate, (meth)acrylic acid, (meth)acrylamide, N-methylol (meth)acrylamide, N-butoxymethyl (meth)acrylamide, methoxypolyethylene glycol (meth)acrylate, ethoxypolyethylene glycol (meth)acrylate, propoxypolyethylene glycol (meth)acrylate, butoxypolyethylene glycol (meth)acrylate, hexaoxypolyethylene glycol (meth)acrylate, octoxypolyethylene glycol polypropylene glycol (meth)acrylate, lauroxypolyethylene glycol (meth)acrylate, stearoxypolyethylene glycol (meth)acrylate, phenoxypolyethylene glycol polypropylene glycol (meth)acrylate, polyethylene glycol mono(meth)acrylate, polypropylene glycol mono(meth)acrylate, polyethylene glycol propylene glycol mono(meth)acrylate, polyethylene glycol tetramethylene glycol (meth)acrylate, propylene glycol polybutylene glycol mono(meth)acrylate, and monoethylene glycol mono(meth)acrylate. Also, a non-crosslinkable macromer such as (meth)acrylic-terminated polystyrene and (meth)acrylic-terminated polymethyl methacrylate may be used, for example.

These monomers may be used alone or in combination of two or more.

When the polymerizable monomer contains the acrylic monomer, the content of the acrylic monomer may be 10 parts by mass or more in 100 parts by mass of the polymerizable monomer, for example. From the viewpoint of sufficiently containing the hydrocarbon monomer, the content of the acrylic monomer is preferably 90 parts by mass or less in 100 parts by mass of the polymerizable monomer.

In the present disclosure, in 100 parts by mass of the polymerizable monomer, the total content of the hydrocarbon monomer and the acrylic monomer is preferably 80 parts by mass or more, more preferably 90 parts by mass or more, still more preferably 98 parts by mass or more, and even more preferably 99 parts by mass or more.

The polymerizable monomer may further contain the other polymerizable monomer different from the hydrocarbon monomer and the acrylic monomer, to the extent that does not impair the effects of the present disclosure. As the other polymerizable monomer, examples include, but are not limited to, a carboxylic acid vinyl ester monomer such as vinyl acetate; a halogenated aromatic vinyl monomer such as halogenated styrene; a vinyl halide monomer such as vinyl chloride; a vinylidene halide monomer such as vinylidene chloride; and a vinylpyridine monomer.

The polymerizable monomer preferably contains a crosslinkable monomer. When the polymerizable monomer contains a crosslinkable monomer, the crosslinking density of the shell can be improved. Accordingly, the shell excellent in strength is easily formed; the hollow particles easily become spherical; and only one hollow portion that is clearly distinguished from the shell is easily formed in the interior of the particles. In 100 parts by mass of the polymerizable monomer, the content of the crosslinkable monomer is preferably more than 50 parts by mass, more preferably 60 parts by mass or more, still more preferably 70 parts by mass or more, and even more preferably 80 parts by mass or more.

In the suspension polymerization method using the polymerizable monomer in which more than 50% by mass of the crosslinkable monomer is contained, it is presumed that since phase separation is likely to occur between the shell-forming component and the hydrophobic solvent in the monomer composition droplets dispersed in the suspension, and since the shell with excellent strength is formed, the deformation of the shell is suppressed and, as a result, the hollow particles having only one hollow portion that is clearly distinguished from the shell in the interior thereof, are formed.

As the crosslinkable monomer, examples include, but are not limited to, a crosslinkable allyl monomer such as diallyl phthalate, and a polymer-type crosslinkable monomer such as both-vinyl-terminated polyphenylene ether, in addition to the above-mentioned crosslinkable hydrocarbon monomer and the above-mentioned crosslinkable acrylic monomer.

The polymerizable monomer may contain a non-crosslinkable monomer to the extent that does not impair the effects of the present disclosure. In this case, in 100 parts by mass of the polymerizable monomer, the content of the crosslinkable monomer may be 98 parts by mass or less, or it may be 96 parts by mass or less, for example.

The content of the crosslinkable monomer is the total content of the difunctional crosslinkable monomer and the trifunctional or higher-functional crosslinkable monomer.

From the viewpoint of improving the pressure resistance and dielectric property of the hollow particles, in 100 parts by mass of the polymerizable monomer, the content of the crosslinkable hydrocarbon monomer is preferably more than 50 parts by mass, more preferably 60 parts by mass or more, still more preferably 70 parts by mass or more, even more preferably 80 parts by mass or more, and particularly preferably 90 parts by mass or more. The upper limit of the content of the crosslinkable hydrocarbon monomer is not particularly limited. In 100 parts by mass of the polymerizable monomer, the upper limit may be 98 parts by mass or less, or it may be 96 parts by mass or less, for example.

From the viewpoint of improving the pressure resistance of the hollow particles, the polymerizable monomer preferably contains a difunctional crosslinkable monomer in combination with a trifunctional or higher-functional crosslinkable monomer.

As the difunctional crosslinkable monomer, preferred is at least one selected from the group consisting of the difunctional crosslinkable hydrocarbon monomer and difunctional crosslinkable acrylic monomer described above. As the difunctional crosslinkable acrylic monomer, ethylene glycol di(meth)acrylate and pentaerythritol di(meth)acrylate are preferred, and ethylene glycol di(meth)acrylate is more preferred. As the difunctional crosslinkable hydrocarbon monomer, divinylbenzene is preferred.

As the trifunctional or higher-functional crosslinkable monomer, preferred is the trifunctional or higher-functional crosslinkable acrylic monomer described above. As the trifunctional or higher-functional crosslinkable acrylic monomer, pentaerythritol tetra(meth)acrylate, trimethylolpropane tri(meth)acrylate, ethoxylated trimethylolpropane tri(meth)acrylate, ethoxylated pentaerythritol tetra(meth)acrylate, pentaerythritol tri(meth)acrylate and dipentaerythritol poly(meth)acrylate are preferred, and pentaerythritol tetra(meth)acrylate and trimethylolpropane tri(meth)acrylate are more preferred.

When the polymerizable monomer contains the difunctional crosslinkable monomer and the trifunctional or higher-functional crosslinkable monomer, in the total 100 parts by mass of the difunctional crosslinkable monomer and the trifunctional or higher-functional crosslinkable monomer, the content of the trifunctional or higher-functional crosslinkable monomer is preferably 5 parts by mass or more, more preferably 10 parts by mass or more, and still more preferably 20 parts by mass or more. On the other hand, it is preferably 50 parts by mass or less, and more preferably 40 parts by mass or less.

The content of the polymerizable monomer in the mixture liquid is not particularly limited. From the viewpoint of the balance of the void ratio, particle diameter and mechanical strength of the hollow particles, with respect to the total mass (100% by mass) of the components (except for the aqueous medium) in the mixture liquid, the lower limit of the content of the polymerizable monomer is preferably 30% by mass or more, and more preferably 40% by mass or more. The upper limit is preferably 60% by mass or less, and more preferably 50% by mass or less.

From the viewpoint of the mechanical strength of the hollow particles, the content of the polymerizable monomer is preferably 96% by mass or more, and more preferably 97% by mass or more, with respect to the total mass (100% by mass) of a solid component obtained by excluding the hydrophobic solvent from the material for the oil phase in the mixture liquid. By controlling the content of the polymerizable monomer to the lower limit value or more, a decrease in the pressure resistance of the hollow particles can be suppressed.

In the present disclosure, the solid component includes all components excluding solvent, and a liquid polymerizable monomer and the like are included in the solid component.

(B) Hydrophobic solvent

The hydrophobic solvent used in the production method of the present disclosure is a non-polymerizable, sparingly water-soluble organic solvent.

The hydrophobic solvent serves as a spacer material for forming the hollow portion in the interior of the particles. In the suspension step described later, the suspension in which the droplets of the monomer composition containing the hydrophobic solvent are dispersed in the aqueous medium, is obtained. In the suspension step, phase separation occurs in the droplets of the monomer composition. As a result, the hydrophobic solvent with low polarity is likely to collect in the interior of the droplets of the monomer composition. In the end, according to their respective polarities, the hydrophobic solvent is distributed in the interior of the droplets of the monomer composition, and the material not containing the hydrophobic solvent is distributed at the periphery of the droplets of the monomer composition.

Then, in the polymerization step described later, an aqueous dispersion containing the precursor particles including the hydrophobic solvent, is obtained. That is, since the hydrophobic solvent collects in the interior of the particles, the hollow portion filled with the hydrophobic solvent is formed in the interior of the obtained precursor particles.

The hydrophobic solvent can be appropriately selected from known hydrophobic solvents, without particular limitation. As the hydrophobic solvent, examples include, but are not limited to, an ester such as ethyl acetate and butyl acetate; an ether ester such as propylene glycol monomethyl ether acetate and propylene glycol monoethyl ether acetate; and a hydrocarbon solvent. Of them, a hydrocarbon solvent is preferably used.

As the hydrocarbon solvent, examples include, but are not limited to, an aromatic hydrocarbon solvent such as benzene, toluene and xylene, and aliphatic hydrocarbons including a chain hydrocarbon solvent such as pentane, hexane, heptane, octane, 2-methylbutane and 2-methylpentane, and a cyclic hydrocarbon solvent such as cyclohexane, methylcyclohexane and cycloheptane.

These hydrophobic solvents may be used alone or in combination of two or more.

From the point of view that phase separation easily occurs between the polymerizable monomer and hydrophobic solvent in the droplets of the monomer composition and the hollow portion is easily formed in the interior of the particles, and from the point of view that the SA(m)/SA(t) ratio of the hollow particles is likely to be 3.0 or more, such an organic solvent is preferably selected as the hydrophobic solvent, that the water solubility is small compared with the crosslinkable monomer contained in the polymerizable monomer. From the same point of view, the hydrophobic solvent is preferably selected so that the HSP distance between the crosslinkable monomer and hydrophobic solvent contained in the polymerizable monomer is 5.00 or more and 8.00 or less. The HSP distance is more preferably 5.15 or more and 7.75 or less, and it is still more preferably 5.30 or more and 7.50 or less.

The HSP distance is an index representing solubility between substances by using Hansen solubility parameters (HSP). The closer the HSP distance is to 0, the higher the compatibility between substances is determined to be. HSP represents the vector of a three-dimensional space (Hansen space) using the following parameters as the coordinate axes: dispersion term (dD), polarity term (dP) and hydrogen bonding term (dH). The three parameters dD, dP and dH represent values specific to substances. The software developed by Hansen et al. (software name: Hansen Solubility Parameter in Practice (HSPiP)) includes the databases on the dD, dP and dH of various substances. By using HSPiP, HSP can be calculated based on the chemical structures of substances.

To obtain the HSP of a mixture of several substances, based on the dD, dP and dH values of the substances contained in the mixture and on the proportion of the substances, the weighted averages thereof are calculated to obtain the dispersion term (dD), polarity term (dP) and hydrogen bonding term (dH) of the mixture, and the HSP of the mixture is obtained.

The HSP distance is a vector distance given by the HSP of two substances, and it is calculated by the following formula (B) using the values of the three parameters of the first substance (dispersion term $dD_1$, polarity term $dP_1$ and hydrogen bonding term dHi) and the values of the three parameters of the second substance (dispersion term $dD_2$, polarity term $dP_2$ and hydrogen bonding term $dH_2$).

$$\text{HSP distance} = \{4(dD_1-dD_2)^2+(dP_1-dP_2)^2+(dH_1-dH_2)^2\}^{0.5}$$

Formula (B)

In the present disclosure, the HSP distance is a value calculated by HSPiP (version 5.3.03). In the HSPiP, each of the dD, dP and dH values is expressed as significant digits with one decimal place, and the HSP distance value is expressed as significant digits with two decimal places.

When the content of the crosslinkable hydrocarbon monomer is more than 50 parts by mass in 100 parts by mass of the crosslinkable monomer, a chain hydrocarbon solvent is preferably used as the hydrophobic solvent. As the chain hydrocarbon solvent, preferred is a chain hydrocarbon solvent containing 5 to 8 carbon atoms, and more preferred is at least one kind selected from the group consisting of pentane, hexane, heptane and octane.

When the content of the crosslinkable hydrocarbon monomer is more than 50 parts by mass in 100 parts by mass of the crosslinkable monomer and when the crosslinkable monomer contains the crosslinkable acrylic monomer, a hydrocarbon solvent containing 4 to 7 carbon atoms is preferably used as the hydrophobic solvent, and a hydrocarbon solvent containing 5 to 7 carbon atoms is more preferably used as the hydrophobic solvent. The hydrocarbon solvent may be an aromatic or aliphatic hydrocarbon. It is preferably an aliphatic hydrocarbon, and more preferably at least one kind selected from the group consisting of hexane, cyclohexane, cycloheptane and methylcyclohexane.

By using the above-described combination of the crosslinkable monomer and the hydrophobic solvent, the hollow particles having a SA(m)/SA(t) ratio of 3.0 or more are easily obtained.

The boiling point of the hydrophobic solvent is not particularly limited. From the viewpoint of ease of removal in the solvent removal step described later, the boiling point of the hydrophobic solvent is preferably 130°C or less, and more preferably 100°C or less. On the other hand, the boiling point of the hydrophobic solvent is preferably 50°C or more, and more preferably 60°C or more, from the point of view that the hydrophobic solvent can be easily included in the precursor particles.

When the hydrophobic solvent is a mixed solvent containing several kinds of hydrophobic solvents and it has several boiling points, the boiling point of the solvent having the highest boiling point among the solvents contained in the mixed solvent, is preferably equal to or less than the upper limit value, and the boiling point of the solvent having the lowest boiling point among the solvents contained in the mixed solvent, is preferably equal to or more than the lower limit value.

The relative permittivity at 20°C of the hydrophobic solvent used in the production method of the present disclosure, is preferably 2.5 or less, and more preferably 2.0 or less. The relative permittivity is one of the indices of the level of the polarity of a compound. In the case where the relative permittivity of the hydrophobic solvent is 2.5 or less and sufficiently small, it is considered that phase separation progresses rapidly in the droplets of the monomer composition and the hollow portion is easily formed.

Examples of hydrophobic solvents having a relative permittivity at 20°C of 2.0 or less, are as follows. The inside of the parentheses is the value of relative permittivity.

Pentane (1.8), hexane (1.9), heptane (1.9), octane (1.9), cyclohexane (2.0).

For the relative permittivity at 20°C, values written in known literatures (for example, the Chemical Society of Japan, as editor, "Kagaku Binran, Kiso Hen, Kaitei 4 Ban", pp. II-498 to II-503, published by Maruzen Publishing Co., Ltd. on September 30, 1993) and other technical information may be used as reference. Examples of the method of measuring the relative permittivity at 20°C include a relative permittivity test that is in conformity with 23 of JIS C 2101:1999 and is performed with the measuring temperature set to 20°C.

The void ratio of the hollow particles can be controlled by changing the amount of the hydrophobic solvent in the mixture liquid. In the suspension step described later, the polymerization reaction progresses while oil droplets containing the polymerizable monomer and so on include the hydrophobic solvent. Accordingly, as the content of the hydrophobic solvent increases, the void ratio of the obtained hollow particles tends to increase.

In the present disclosure, with respect to 100 parts by mass of the polymerizable monomer, the content of the hydrophobic solvent in the mixture liquid is preferably 50 parts by mass or more and 500 parts by mass or less, from the following viewpoints: the particle diameter of the hollow particles is easily controlled; the void ratio is easily increased while maintaining the strength of the hollow particles; and the amount of the residual hydrophobic solvent in the hollow particles is easily reduced. The content of the hydrophobic solvent in the mixture liquid is more preferably 70 parts by mass or more and 300 parts by mass or less, and still more preferably 90 parts by mass or more and 200 parts by mass or less, with respect to 100 parts by mass of the polymerizable monomer.

(C) Polymerization initiator

In the production method of the present disclosure, the mixture liquid preferably contains an oil-soluble polymerization initiator as the polymerization initiator. The oil-soluble polymerization initiator is not particularly limited, as long as it is a lipophilic one having a solubility in water of 0.2% by mass or less. As the oil-soluble polymerization initiator, examples include, but are not limited to, an organic peroxide such as benzoyl peroxide, lauroyl peroxide, t-butyl peroxy-2-ethylhexanoate, t-butylperoxy diethylacetate and t-butylperoxy pivalate, and an azo compound such as 2,2'-azobis(2,4-dimethylvaleronitrile), azobis(isobutyronitrile) and 2,2'-azobis(4-methoxy-2,4-dimethylvaleronitrile) .

With respect to 100 parts by mass of the polymerizable monomer in the mixture liquid, the content of the polymerization initiator is preferably from 0.1 parts by mass to 10 parts by mass, more preferably from 0.5 parts by mass to 7 parts by mass, and still more preferably from 1 part by mass to 5 parts by mass. When the content of the polymerization initiator is equal to or more than the lower limit value, a polymerization reaction can progress sufficiently. When the content of the polymerization initiator is equal to or less than the upper limit value, the oil-soluble polymerization initiator is less likely to remain after the end of the polymerization reaction, and an unexpected side reaction is less likely to progress.

(D) Dispersion stabilizer

The dispersion stabilizer is an agent for dispersing the droplets of the monomer composition in the aqueous medium in the suspension step. As the dispersion stabilizer, examples include, but are not limited to, an inorganic dispersion stabilizer, an organic or inorganic water-soluble polymer stabilizer, and a surfactant. In the present disclosure, an inorganic dispersion stabilizer is preferably used as the dispersion stabilizer, from the point of view that the particle diameter of the droplets can be easily controlled in the suspension, and the particle size distribution of the obtained hollow particles can be sharp, and that an excessive decrease in the shell thickness is suppressed, and a decrease in the strength of the hollow particles is suppressed.

As the inorganic dispersion stabilizer, examples include, but are not limited to, inorganic compounds including a sulfate such as barium sulfate and calcium sulfate; a carbonate such as barium carbonate, calcium carbonate and magnesium carbonate; a phosphate such as calcium phosphate; a metal oxide such as aluminum oxide and titanium oxide; a metal hydroxide such as aluminum hydroxide, magnesium hydroxide, calcium hydroxide, barium hydroxide and iron(II)hydroxide; and silicon dioxide. These inorganic dispersion stabilizers may be used alone or in combination of two or more.

Of these inorganic dispersion stabilizers, a sparingly water-soluble inorganic dispersion stabilizer is preferred; a sparingly water-soluble metal salt such as the above-mentioned sulfate, carbonate, phosphate and metal hydroxide is more preferred; a metal hydroxide is still more preferred; and magnesium hydroxide is particularly preferred.

In the present disclosure, "sparingly water-soluble" is preferably such that the solubility in 100 g of water is 0.5 g or less.

In the present disclosure, the sparingly water-soluble inorganic dispersion stabilizer is particularly preferably used in the form of colloidal particles being dispersed in the aqueous medium, that is, in the form of a colloidal dispersion containing the sparingly water-soluble, inorganic dispersion stabilizer colloidal particles. Accordingly, the particle size distribution of the droplets of the monomer composition can be sharp; moreover, the amount of the residual inorganic dispersion stabilizer in the obtained hollow particles can be easily reduced by washing.

The colloidal dispersion containing the sparingly water-soluble inorganic dispersion stabilizer colloidal particles can be prepared by, for example, reacting at least one selected from alkali metal hydroxide salts and alkaline earth metal hydroxide salts with a water-soluble polyvalent metal salt, which is not an alkaline earth metal hydroxide salt, in the aqueous medium.

As the alkali metal hydroxide salts, examples include, but are not limited to, lithium hydroxide, sodium hydroxide and potassium hydroxide. As the alkaline earth metal hydroxide salts, examples include, but are not limited to, barium hydroxide and calcium hydroxide.

The water-soluble polyvalent metal salt is only required to be a water-soluble polyvalent metal salt other than compounds corresponding to the above-mentioned alkaline earth metal hydroxide salts. As the polyvalent metal salt, examples include, but are not limited to, magnesium metal salts such as magnesium chloride, magnesium phosphate and magnesium sulfate; calcium metal salts such as calcium chloride, calcium nitrate, calcium acetate and calcium sulfate; aluminum metal salts such as aluminum chloride and aluminum sulfate; barium salts such as barium chloride, barium nitrate and barium acetate; and zinc salts such as zinc chloride, zinc nitrate and zinc acetate. Among them, magnesium metal salts, calcium metal salts and aluminum metal salts are preferred; magnesium metal salts are more preferred; and magnesium chloride is particularly preferred.

The method for reacting the water-soluble polyvalent metal salt with the at least one selected from alkali metal hydroxide salts and alkaline earth metal hydroxide salts in the aqueous medium, is not particularly limited. As the method, examples include, but are not limited to, mixing an aqueous solution of the water-soluble polyvalent metal salt and an aqueous solution of the at least one selected from alkali metal hydroxide salts and alkaline earth metal hydroxide salts.

Also, colloidal silica may be used as the colloidal dispersion containing the sparingly water-soluble inorganic dispersion stabilizer colloidal particles.

As the organic water-soluble polymer stabilizer, examples include, but are not limited to, polyvinyl alcohol, a polycarboxylic acid (e.g., polyacrylic acid), a cellulose (e.g., hydroxyethyl cellulose, carboxymethyl cellulose, methyl cellulose, ethyl cellulose), polyvinylpyrrolidone, polyacrylimide, polyethylene oxide and a poly(hydroxystearic acid-g-methyl methacrylate-co-methacrylic acid) copolymer.

As an inorganic water-soluble high-molecular-weight compound, examples include, but are not limited to, sodium tripolyphosphate.

The surfactant is a compound containing both a hydrophilic group and a hydrophobic group per molecule. As the surfactant, examples include, but are not limited to, a known ionic surfactant such as an anionic surfactant, a cationic surfactant and an ampholytic surfactant, and a known nonionic surfactant.

The content of the dispersion stabilizer is not particularly limited. With respect to the total mass (100 parts by mass) of the polymerizable monomer and the hydrophobic solvent, the content of the dispersion stabilizer is preferably from 0.5 parts by mass to 15 parts by mass, and more preferably from 1 part by mass to 10 parts by mass. When the content of the dispersion stabilizer is equal to or more than the lower limit value, the droplets of the monomer composition can be sufficiently dispersed in the suspension so that they do not join together. On the other hand, when the content of the dispersion stabilizer is equal to or less than the upper limit value, an increase in the viscosity of the suspension is prevented in the formation of the droplets, and a problem such that a droplet forming machine is clogged with the suspension, can be avoided.

With respect to 100 parts by mass of the aqueous medium, the content of the dispersion stabilizer is preferably from 0.5 parts by mass to 15 parts by mass, and more preferably from 0.5 parts by mass to 10 parts by mass.

(E) Aqueous medium

In the present disclosure, the term "aqueous medium" means a medium selected from the group consisting of water, a hydrophilic solvent and a mixture thereof.

When a mixture of water and a hydrophilic solvent is used, from the viewpoint of forming the droplets of the monomer composition, it is important that the polarity of the entire mixture is not too low. In this case, for example, the mass ratio between water and the hydrophilic solvent (water : hydrophilic solvent) may be set to 99:1 to 50:50.

In the present disclosure, the hydrophilic solvent is not particularly limited, as long as it is one that mixes with water sufficiently and does not develop phase separation. As the hydrophilic solvent, examples include, but are not limited to, alcohols such as methanol and ethanol; tetrahydrofuran (THF); and dimethyl sulfoxide (DMSO).

The content of the aqueous medium is not particularly limited. From the viewpoint of controlling the particle diameter and void ratio of the hollow particles in the preferred ranges described below, with respect to 100 parts by mass of the polymerizable monomer contained in the mixture liquid, the lower limit of the content of the aqueous medium is preferably 200 parts by mass or more, more preferably 400 parts by mass or more, and still more preferably 600 parts by mass or more. The upper limit is preferably 1000 parts by mass or less, and more preferably 800 parts by mass or less.

The mixture liquid may further contain other materials that are different from the above-mentioned materials (A) to (E), to the extent that does not impair the effects of the present disclosure.

The mixture liquid is obtained by mixing the above-mentioned materials and other materials as needed, appropriately stirring the mixture, etc. In the mixture liquid, an oil phase containing lipophilic materials such as (A) the polymerizable monomer, (B) the hydrophobic solvent and (C) the polymerization initiator is dispersed with a size of a particle diameter of approximately several millimeters in an aqueous phase containing (D) the dispersion stabilizer, (E) the aqueous medium, etc. The dispersion state of these materials in the mixture liquid can be observed with the naked eye, depending on the types of the materials.

In the mixture liquid preparation step, the mixture liquid may be obtained by simply mixing the above-mentioned materials and other materials as needed, appropriately stirring the mixture, etc. From the point of view that the shell can be easily uniform, it is preferable to prepare the mixture liquid by separately preparing the oil phase, which contains the polymerizable monomer, the hydrophobic solvent and the polymerization initiator, and the aqueous phase, which contains the dispersion stabilizer and the aqueous medium, in advance, and then mixing the phases together. In the present disclosure, a colloidal dispersion in which a sparingly water-soluble inorganic dispersion stabilizer is dispersed in the form of colloidal particles in the aqueous medium, can be preferably used as the aqueous phase.

As just described, by separately preparing the oil phase and the aqueous phase in advance and then mixing them, the particle diameter of the hollow particles can be easily controlled.

(2) Suspension step

The suspension step includes suspending the mixture liquid to prepare the suspension in which the droplets of the monomer composition containing the hydrophobic solvent are dispersed in the aqueous medium.

The suspension method for forming the droplets of the monomer composition is not particularly limited, and a known suspension method can be employed. A disperser is used to prepare the suspension, and it may be a commercially-available mixer. As the mixer, examples include, but are not limited to, a horizontal or vertical in-line disperser such as MILDER (product name, manufactured by Pacific Machinery & Engineering Co., Ltd.), CAVITRON (product name, manufactured by EUROTEC, Ltd.) and an in-line disperser manufactured by IKA (e.g., DISPAX-REACTOR (registered trademark) DRS (product name)), and an emulsifying disperser such as HOMOMIXER MARK II series manufactured by PRIMIX Corporation.

In the suspension prepared in the suspension step, the droplets of the monomer composition containing the lipophilic materials mentioned above and having a particle diameter of approximately from 1 um to 30 um, are dispersed uniformly in the aqueous medium. Such droplets of the monomer composition are difficult to observe with the naked eye and can be observed with a known observation instrument such as an optical microscope.

In the suspension step, since phase separation occurs in the droplets of the monomer composition, the hydrophobic solvent with low polarity is likely to collect in the interior of the droplets. As a result, in the obtained droplets, the hydrophobic solvent is distributed in the interior thereof, and the material not containing the hydrophobic solvent is distributed at the periphery thereof.

The droplets of the monomer composition dispersed in the aqueous medium are formed by the oil-soluble monomer composition and the dispersion stabilizer surrounding the periphery of the oil-soluble monomer composition. The droplets of the monomer composition contain the oil-soluble polymerization initiator, the polymerizable monomer and the hydrophobic solvent.

The droplets of the monomer composition are minute oil droplets, and the oil-soluble polymerization initiator generates polymerization initiating radicals in the interior of the minute oil droplets. Therefore, the precursor particles having a target particle diameter can be produced without an excessive growth of the minute oil droplets.

In such a suspension polymerization method using the oil-soluble polymerization initiator, there is no opportunity for the polymerization initiator to come into contact with the polymerizable monomer dispersed in the aqueous medium. Thus, the subgeneration of surplus resin particles (e.g., solid particles having a relatively small particle diameter) in addition to the target resin particles having the hollow portion, can be suppressed by using the oil-soluble polymerization initiator.

(3) Polymerization step

The polymerization step includes subjecting the suspension obtained by the above-described suspension step to a polymerization reaction to prepare a precursor composition containing precursor particles which have a hollow portion surrounded by a shell containing a resin and which include the hydrophobic solvent in the hollow portion. The precursor particles are formed by polymerization of the polymerizable monomer contained in the droplets of the monomer composition, and the shell of the precursor particles contains the polymer of the polymerizable monomer as the resin.

The polymerization system is not particularly limited. For example, a batch system, a semicontinuous system or a continuous system may be employed.

The polymerization temperature is preferably from 40°C to 90°C, and more preferably from 50°C to 80°C.

The polymerization reaction time is preferably from 1 hour to 48 hours, and more preferably from 1.5 hours to 36 hours.

In the polymerization step, the shell portion of the droplets of the monomer composition, which contain the hydrophobic solvent in the interior, polymerizes. Accordingly, as described above, the hollow portion filled with the hydrophobic solvent is formed in the interior of the obtained precursor particles.

(4) Solvent removal step

The solvent removal step includes removing the included hydrophobic solvent from the precursor particles. In the present disclosure, the included hydrophobic solvent can be removed from the precursor particles by low-temperature or short-time drying. Accordingly, the hollow particles in which the deterioration of the shell is suppressed, can be obtained.

In the present disclosure, for example, the solvent removal step can be carried out by the method of removing the included hydrophobic solvent from the precursor particles in the precursor composition in which the precursor particles are dispersed in the aqueous medium, without separating the precursor particles from the aqueous medium.

As the method of removing the included hydrophobic solvent from the precursor particles without separating the precursor particles from the aqueous medium, examples include, but are not limited to, bubbling an inert gas into the precursor composition which contains the precursor particles and the aqueous medium and which is in the form of slurry.

The bubbling temperature may be 100°C or less. From the viewpoint of suppressing the deterioration of the shell, the temperature is preferably 95°C or less, more preferably 90°C or less, still more preferably 75°C or less, and even more preferably 50°C or less. The lower limit of the bubbling temperature is not particularly limited. On the other hand, from the viewpoint of sufficient removal of the hydrophobic solvent, the lower limit is preferably 30°C or more, and more preferably 40°C or more.

The inert gas used for the bubbling is not particularly limited. As the inert gas, examples include, but are not limited to, nitrogen and argon.

The bubbling condition is appropriately controlled, depending on the type of the hydrophobic solvent included in the precursor particles, and it is not particularly limited. For example, the inert gas may be bubbled in an amount of 1 L/min to 8 L/min for 1 hour to 100 hours. From the viewpoint of suppressing the deterioration of the shell, the bubbling time is preferably 90 hours or less, and more preferably 80 hours or less.

Such a slurry is obtained by the bubbling, that the hollow particles in which the hollow portion is filled with the inert gas are dispersed in the aqueous medium. Then, for example, by performing solid-liquid separation of the slurry and drying the shell of the thus-obtained hollow particles, hollow particles in which the hollow portion is filled with the gas of the dry atmosphere, can be obtained.

The method of performing the solid-liquid separation is not particularly limited, and a known method may be used.

As the solid-liquid separation method, examples include, but are not limited to, a centrifugation method, a filtration method, and still-standing separation. Among them, a centrifugation method or a filtration method may be employed, and from the viewpoint of simplicity of the operation, a centrifugation method may be employed.

Since the shell of the hollow particles obtained by the solid-liquid separation is in wet state, the shell is preferably dried for the removal of the aqueous medium. The method for drying the shell is not particularly limited. For example, a known method may be employed, such as a reduced pressure drying method, a heat drying method, a flash drying method, and the combination of these methods. From the viewpoint of suppressing the deterioration of the shell, the temperature for drying the shell is preferably 150°C or less, and more preferably 100°C or less. On the other hand, from the viewpoint of sufficient removal of the aqueous medium, it is preferably 30°C or more, and more preferably 40°C or more. The time for drying the shell is not particularly limited. It is preferably from 1 to 15 hours, from the viewpoint of sufficient removal of the aqueous medium from the shell while suppressing the deterioration of the shell.

In the present disclosure, the solvent removal step may be carried out by the following method: after the precursor composition obtained by the polymerization step is subjected to the solid-liquid separation, the included hydrophobic solvent is removed from the precursor particles in a gaseous atmosphere. Accordingly, the hydrophobic solvent in the interior of the precursor particles is substituted with air, and the hollow particles filled with gas are obtained.

The term "in a gaseous atmosphere" includes "in an environment where no liquid component exists in the outside of the precursor particles" and "in an environment where only a very small amount of liquid component at a level that does not influence the removal of the hydrophobic solvent, exists in the outside of the precursor particles" in a strict sense. The term "in a gaseous atmosphere" can be reworded as a state where the precursor particles do not exist in a slurry, or it can be reworded as a state where the precursor particles exist in a dry powder. That is, in this step, it is an environment where the precursor particles come into direct contact with the outside gas.

As the method of solid-liquid separation of the precursor composition obtained by the polymerization step, the above-described solid-liquid separation method can be employed.

The method for removing the hydrophobic solvent from the precursor particles in a gaseous atmosphere after the solid-liquid separation may be a method carried out under an environment at a temperature of 50°C or less, and it may be carried out by a known drying method such as a reduced pressure drying method, a heat drying method, a flash drying method, and the combination of these methods. From the viewpoint of suppressing the deterioration of the shell, the drying temperature is preferably 150°C or less, and more preferably 100°C or less. On the other hand, from the viewpoint of sufficient removal of the hydrophobic solvent, the drying temperature is preferably 30°C or more, and more preferably 40°C or more.

The drying atmosphere is not particularly limited and may be appropriately selected depending on the intended application of the hollow particles. Possible examples of the drying atmosphere include air, oxygen, nitrogen and argon. Further, by filling the interior of the hollow particles with gas once and then performing reduced pressure drying, hollow particles in which the interior is evacuated are also temporarily obtained.

The hydrophobic solvent in the interior of the precursor particles is substituted with the outside gas by the drying operation in the gaseous atmosphere. As a result, the hollow particles in which the hollow portion is occupied by gas, are obtained.

The method for obtaining the hollow particles in which the hollow portion is filled with gas, by carrying out the solid-liquid separation of the precursor composition in the form of slurry and then removing the included hydrophobic solvent from the precursor particles in a gaseous atmosphere, is compared to the method for obtaining the hollow particles in which the hollow portion is filled with gas, by removing the included hydrophobic solvent from the precursor particles in the slurry which contains the precursor particles and the aqueous medium and then removing the aqueous medium from the hollow particles by solid-liquid separation in a gaseous atmosphere. As a result, the former method is advantageous in advantageous in that the hollow particles are less likely to collapse in the hydrophobic solvent removal step, and the latter method is advantageous in that the amount of the residual hydrophobic solvent is decreased by the inert gas bubbling.

Also, as the method for removing the included hydrophobic solvent from the precursor particles in a low temperature environment of 50°C or less, examples include, but are not limited to, the following methods: evaporating the hydrophobic solvent included in the precursor particles at a predetermined pressure (a high, normal or reduced pressure) in the slurry containing the precursor particles and the aqueous medium, and evaporating the hydrophobic solvent included in the precursor particles by introducing water vapor to the slurry containing the precursor particles and the aqueous medium at a predetermined pressure (a high, normal or reduced pressure).

(5) Others

In addition to the steps (1) to (4) mentioned above, the following washing step (5-a) and the following particle interior substitution step (5-b) may be added, for example.

(5-a) Washing step

The washing step includes carrying out washing by adding acid or alkali, for removal of the dispersion stabilizer remaining in the precursor composition containing the precursor particles before the solvent removal step. When the dispersion stabilizer used is an acid-soluble inorganic dispersion stabilizer, washing is preferably carried out by adding acid to the precursor composition containing the precursor particles. When the dispersion stabilizer used is an alkali-soluble inorganic dispersion stabilizer, washing is preferably carried out by adding alkali to the precursor composition containing the precursor particles.

When the acid-soluble inorganic dispersion stabilizer is used as the dispersion stabilizer, the pH of the precursor composition is preferably adjusted to 6.5 or less, and more preferably 6 or less, by adding acid to the precursor composition containing the precursor particles. As the added acid, an inorganic acid such as sulfuric acid, hydrochloric acid and nitric acid or an organic acid such as formic acid and acetic acid may be used. Of them, sulfuric acid is particularly preferred, due to its high dispersion stabilizer removal efficiency and small influence on production equipment.

(5-b) Particle interior substitution step

The particle interior substitution step includes substituting the gas or liquid in the interior of the hollow particles with another gas or liquid. By such substitution, the environment of the interior of the hollow particles can be changed; molecules can be selectively confined in the interior of the hollow particles; or the chemical structure of the interior of the hollow particles can be modified in accordance with the intended application.

3. Applications of the hollow particles

When added to a molded body, the hollow particles of the present disclosure exert excellent effects as a weight reducing material, a heat insulation material, an acoustic insulation material, a damping material and so on. Accordingly, the hollow particles of the present disclosure are suitable as an additive for molded bodies.

The molded body containing the hollow particles of the present disclosure may contain, as the resin, thermoplastic or thermosetting resin such as polyethylene, polypropylene, polyvinyl chloride, polystyrene, polyurethane, epoxy resin, acrylonitrile-butadiene-styrene (ABS) resin, acrylonitrilestyrene (AS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin and polyetherimide resin. Depending on the type of the resin, the resin may be appropriately mixed with a curing agent or catalyst such as an amine, an acid anhydride and an imidazole.

The molded body containing the hollow particles of the present disclosure may contain a thermoplastic elastomer as the resin. As the thermoplastic elastomer, a thermoplastic elastic polymer that is conventionally used as a molding resin, may be used, such as urethane-based elastomer, styrene-based elastomer, olefin-based elastomer, amide-based elastomer and ester-based elastomer. The thermoplastic elastomer is an elastomer having the following properties: it shows rubber elasticity at ordinary temperature (25°C) and it can be plasticized and molded at high temperature.

Also, the molded body containing the hollow particles of the present disclosure is not limited to a resin molded body. For example, it may be a rubber molded body or a molded body containing a mixture of a resin and a rubber. The molded body containing the hollow particles of the present disclosure may contain a rubber such as a natural rubber (NR), an isoprene rubber (IR), a butadiene rubber (BR), a styrene-butadiene copolymer rubber (SBR), an acrylonitrile-butadiene copolymer rubber (NBR) and an ethylene-propylene-diene terpolymer (EPDM). These rubbers may be used alone or in combination of two or more.

The molded body containing the hollow particles of the present disclosure may further contain organic or inorganic fibers such as carbon fibers, glass fibers, aramid fibers and polyethylene fibers. The hollow particles of the present disclosure can be contained as a filler in a molded body formed by use of rubber or resin and in a molded body formed by use of a fiber-containing material which contains rubber or resin.

As the applications of the molded body made of resin or rubber, which contains the hollow particles of the present disclosure, examples include, but are not limited to, a material such as a light reflective material, a heat insulation material, a sound insulation material and a low dielectric material, which are used in various kinds of fields such as the automotive field, the electronics field, the electric field, the architecture field, the aviation field and the space field; food containers; footwears such as sports shoes and sandals; components of household appliances; components of bicycles; stationery supplies; tools; and filaments of 3D printers.

Due to their excellent dielectric property, the hollow particles of the present disclosure are useful as, for example, an additive for insulating resin sheets that are used for the production of electronic parts such as a printed circuit board. An insulating resin sheet containing the hollow particles of the present disclosure can be produced as follows, for example: a composition is prepared by mixing the hollow particles of the present disclosure and the above-described thermoplastic resin, a thermosetting resin, a thermoplastic elastomer, or a mixture thereof, and the composition is molded into a sheet by applying the composition to one or both surfaces of a sheet-shaped substrate and drying the applied composition, by extrusion molding of the composition, by transferring the composition, etc., thereby producing the insulating resin sheet. When the resin or elastomer contained in the insulating resin sheet is adhesive, the insulating resin sheet can be used as an adhesive sheet. More specifically, it can be used as a bonding sheet, for example. A bonding sheet is a material for forming insulating adhesive layers which are used to attach a conductor layer and an organic insulating layer in the production of a multi-layer printed circuit board.

The hollow particles of the present disclosure have a high void ratio, are less likely to collapse, and have high heat resistance. Accordingly, the hollow particles have heat insulation properties and shock-absorbing properties (cushioning properties) required of an under-coating material, and they also have heat resistance in line with thermal paper uses. Further, the hollow particles of the present disclosure are useful as a plastic pigment that is excellent in gloss, hiding power, etc.

A useful component such as a perfume, a medicine, an agricultural chemical and an ink component can be enclosed in the interior of the hollow particles of the present disclosure by a means such as immersion treatment or depressurized or pressurized immersion treatment. Accordingly, the hollow particles in which such a useful component is enclosed, can be used for various applications in accordance with the component contained in the interior.

Also, the hollow particles of the present disclosure are suitable as a rust retardant. Since the hollow particles of the present disclosure are also useful as an additive for decreasing electric conductivity, for example, a coating material containing the hollow particles of the present disclosure can be used as a rust-resistant coating material (such as a coating primer and a lubricating coating material) for increasing the anticorrosivity and rust resistance of steel and so on. A rust-resistant additive may be included in the hollow particles added to rust-resistant coating materials.

4. Resin composition

The resin composition of the present disclosure contains the hollow particles of the present disclosure and a resin (a matrix resin).

In general, the resin composition of the present disclosure is used as a molding material for the resin molded body described below. For example, the resin composition may be in the form of liquid or pellets, or it may be a prepreg.

As the resin composition in the form of liquid, examples include, but are not limited to, a liquid resin composition containing a liquid matrix resin before being subjected to curing reaction, and a liquid resin composition obtained by dissolving or dispersing components in a solvent. Also, the liquid resin composition may be a resin composition liquefied by melting the matrix resin thereinto. The prepreg can be obtained by, for example, impregnating a substrate with the liquid resin composition and drying them. As the resin composition in the form of pellets, examples include, but are not limited to, a pelletized resin composition obtained by melt-kneading a resin composition containing a thermoplastic matrix resin and the hollow particles and then pelletizing the resin composition when solidified by cooling.

As described above, the hollow particles of the present disclosure are suppressed from a deterioration in the performance (e.g., pressure resistance) caused by the deterioration of the shell. Since the hollow particles of the present disclosure are excellent in pressure resistance, when kneading or mixing the resin composition of the present disclosure and during the subsequent molding, the voids in the interior of the hollow particles are easily maintained. Accordingly, the resin molded body obtained from the resin composition of the present disclosure is excellent in weight reduction and heat insulation properties.

As the matrix resin contained in the resin composition of the present disclosure, examples include, but are not limited to, the same resin as the resin that is used in the above-described molded body containing the hollow particles of the present disclosure. The details are as described below.

For example, the matrix resin contained in the resin composition of the present disclosure may be a curable resin such as a thermosetting resin, a photocurable resin and a room temperature curable resin, or it may be a thermoplastic resin or the like.

Also, the matrix resin contained in the resin composition of the present disclosure is not particularly limited. The matrix resin may be an unreacted monomer, prepolymer or macromonomer; it may be a polymer; or it may be a precursor of a cured resin, such as a polyamic acid. The matrix resin contained in the resin composition of the present disclosure may function as a binder when cured by, for example, heating or light irradiation, or when cured by use of a curing agent, a polymerization initiator, a catalyst or the like.

As the thermosetting resin, a known thermosetting resin may be used, and it is not particularly limited. As the thermosetting resin, examples include, but are not limited to, phenolic resin, melamine resin, urea resin, unsaturated polyester resin, epoxy resin, polyurethane resin, silicon resin, alkyd resin, thermosetting modified polyphenylene ether resin, thermosetting polyimide resin, benzoxazine resin, allyl resin, aniline resin, maleimide resin, bismaleimide triazine resin, liquid crystalline polyester resin, vinyl ester resin, cyanate ester resin, polyetherketoneketone resin, polyetherimide resin, and precursors of these resins before curing. These thermosetting resins may be used alone or in combination of two or more.

As the room temperature curable resin, examples include, but are not limited to, an adhesive that is curable at room temperature by addition of a catalyst, such as an epoxy adhesive, a silicone adhesive and an acrylic adhesive.

As the thermoplastic resin, examples include, but are not limited to, polyolefin resin, polyamide resin, polycarbonate resin, polyphenylene sulfide resin, polyether ether ketone resin, polystyrene resin, polyphenylene oxide resin and a liquid crystal polymer (LCP).

As the thermoplastic resin, examples include, but are not limited to, polyolefin (such as polypropylene and polyethylene), polyamide (such as PA6, PA66 and PA12), polyimide, polyamideimide, polyetherimide, polyetherketoneketone, polyvinyl chloride, polystyrene, poly(meth)acrylate, polycarbonate, polyvinylidene fluoride, acrylonitrile-butadiene-styrene copolymer (ABS) resin, an acrylonitrilestyrene copolymer (AS), polyphenylene ether, polyphenylene sulfide, polyester, polytetrafluoroethylene and a thermoplastic elastomer. These thermoplastic resins may be used alone or in combination of two or more.

These matrix resins may be used alone or in combination of two or more.

The matrix resin contained in the resin composition of the present disclosure is appropriately selected depending on the application of the resin composition, and it is not particularly limited. The matrix resin preferably contains at least one kind selected from the group consisting of polyethylene, polypropylene, polystyrene, polyurethane resin, epoxy resin, acrylonitrile-butadiene-styrene (ABS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin and polyetherimide resin, for example.

In the resin composition of the present disclosure, the content of the matrix resin is not particularly limited, and it is preferably from 50 parts by mass to 95 parts by mass with respect to 100 parts by mass of the solid content of the resin composition. When the content of the matrix resin is equal to or more than the lower limit value, the resin composition shows excellent moldability when formed into a resin molded body, and the resin molded body thus obtained is excellent in mechanical strength. On the other hand, when the content of the matrix resin is equal to or less than the upper limit value, the hollow particles of the present disclosure can be sufficiently contained; therefore, the effects such as weight reduction and heat insulation can be sufficiently exerted by the hollow particles of the present disclosure.

The resin composition of the present disclosure may further contain an additive for developing a curing reaction, such as a curing agent, a curing catalyst and an initiator. They can be appropriately selected from known additives, depending on the type of the matrix resin, without particular limitation. As the epoxy resin curing agent, examples include, but are not limited to, an amine, an acid anhydride, an imidazole, a thiol, a phenol, a naphthol, a benzoxazine, a cyanate ester and a carbodiimide.

The content of the curing agent is not particularly limited. For example, it may be from 5 parts by mass to 120 parts by mass, with respect to 100 parts by mass of the matrix resin.

In the resin composition of the present disclosure, the content of the hollow particles is not particularly limited. With respect to 100 parts by mass of the matrix resin, it is preferably from 5 parts by mass to 30 parts by mass, and more preferably from 10 parts by mass to 30 parts by mass. When the content of the hollow particles is equal to or more than the lower limit value, the effects by the hollow particles of the present disclosure, such as weight reduction and heat insulation, can be sufficiently exerted. On the other hand, when the content of the hollow particles is equal to or less than the upper limit value, the matrix resin can be sufficiently contained in the resin composition. Accordingly, the moldability and mechanical strength of the resin composition can be improved.

The resin composition of the present disclosure may further contain reinforcing fibers. As the reinforcing fibers, examples include, but are not limited to, organic or inorganic fibers such as carbon fibers, glass fibers, aramid fibers, polyethylene fibers and cellulose nanofibers. The reinforcing fibers are particularly preferably at least one kind of fibers selected from carbon fibers and glass fibers.

The reinforcing fibers contained in the resin composition of the present disclosure may be reinforcing fibers used as the substrate of a prepreg, or they may be reinforcing fibers contained as a filler.

When the resin composition of the present disclosure contains the reinforcing fibers, with respect to the total (100 parts by mass) of the hollow particles and the matrix resin, the lower limit of the content of the reinforcing fibers is preferably 5 parts by mass or more, and more preferably 10 parts by mass or more. On the other hand, the upper limit of the content is preferably 200 parts by mass or less, and more preferably 150 parts by mass or less. When the content of the reinforcing fibers is equal to or more than the lower limit value, the strength improving effect by the reinforcing fibers is excellent. On the other hand, when the content of the reinforcing fibers is equal to or less than the upper limit value, the matrix resin and the hollow particles can be sufficiently contained. Accordingly, the moldability and the weight reduction and heat insulation properties can be improved.

The resin composition of the present disclosure may further contain a solvent. A known solvent can be used as the solvent, and it is appropriately selected depending on the type of the matrix resin.

When the resin composition of the present disclosure contains the solvent, the solid content concentration of the resin composition of the present disclosure is preferably from 10% by mass to 90% by mass.

As needed, the resin composition of the present disclosure may further contain additives such as a curing accelerator, a filler, a coupling agent, a stress reducing agent, a defoaming agent, a leveling agent, a UV absorber, a foaming agent, an antioxidant, a UV absorber, a colorant, a thermal stabilizer, a filler and a flame retardant, to the extent that does not impair the effects of the present disclosure.

For example, the resin composition of the present disclosure can be obtained by mixing the hollow particles of the present disclosure, the matrix resin, and other components which are added as needed. The method for mixing them is not particularly limited. For example, they can be mixed by use of a known mixing device such as a planetary mixer, a ball mill, a bead mill, a planetary mixer and a roll mill. The resin composition of the present disclosure obtained by use of such a mixing device is generally a resin composition in the form of liquid (a resin varnish).

When the matrix resin is a thermoplastic resin, the resin composition of the present disclosure may be obtained by melting the matrix resin (the thermoplastic resin), adding the hollow particles of the present disclosure and other components which are added as needed to the melted matrix resin, and melt-kneading them.

Also, the prepreg can be obtained by impregnating the substrate with the resin varnish, which is obtained by mixing the hollow particles of the present disclosure, the matrix resin, and other components added as needed, and drying the resin varnish. As the substrate, examples include, but are not limited to, inorganic fibers such as carbon fibers, glass fibers, metal fibers and ceramic fibers, and organic synthetic fibers such as polyamide fibers, polyester-based fibers, polyolefin-based fibers and novoloid fibers. Of them, glass fibers (glass cloth) are preferred. The form of the substrate is not limited and may be a woven fabric, a non-woven fabric or the like.

5. Resin molded body

The resin molded body of the present disclosure is a resin molded body obtained from the resin composition of the present disclosure described above.

The method for obtaining the resin molded body from the resin composition of the present disclosure is appropriately selected from known methods, depending on the type of the matrix resin contained in the resin composition, the form of the resin composition, etc. The method is not particularly limited.

When the resin composition of the present disclosure is varnish, the resin molded body can be obtained as follows, for example: the resin composition is applied on a support, and the applied resin composition is dried and cured as needed, thereby obtaining the resin molded body.

As the material of the support, examples include, but are not limited to, a resin such as polyethylene terephthalate and polyethylene naphthalate, and a metal such as copper, aluminum, nickel, chromium, gold and silver. The surface of these supports may be coated with a release agent.

The resin composition can be applied by a known method. As the method, examples include, but are not limited to, dip coating, roll coating, curtain coating, die coating, slit coating and gravure coating.

When the resin composition contains the solvent, the resin composition is preferably dried after the application of the resin composition. The drying temperature is preferably a temperature at which the matrix resin is not cured, and it is generally 20°C or more and 200°C or less, and preferably 30°C or more and 150°C or less. The drying time is generally 30 seconds or more and 1 hour or less, and preferably 1 minute or more and 30 minutes or less.

The curing reaction of the resin composition is not particularly limited, and it is performed by a method based on the type of the matrix resin. When the resin composition contains the matrix resin which is curable by heating, the heating temperature for the curing reaction is not particularly limited, and it is appropriately adjusted depending on the type of the resin. The heating temperature is generally 30°C or more and 400°C or less, preferably 70°C or more and 300°C or less, and more preferably 100°C or more and 200°C or less. The curing time is 5 minutes or more and 5 hours or less, and preferably 30 minutes or more and 3 hours or less. The heating method is not particularly limited. For example, an electric oven may be used.

Note that the liquid matrix resin before being subjected to a curing reaction and the matrix resin to be dissolved or dispersed in the solvent, may be a thermosetting or thermoplastic resin.

When the resin composition of the present disclosure is a prepreg, the resin molded body can be obtained by drying and curing the prepreg.

The preferred condition for drying and curing the prepreg is the same as the above-described preferred condition for drying and curing the resin composition.

When the resin composition of the present disclosure is a resin composition such as a pelletized resin composition containing a thermoplastic matrix resin, the resin molded body of the present disclosure can be obtained by melt-kneading the resin composition and then molding the same into a desired form by a known molding method, such as extrusion molding, injection molding, press molding and compression molding. The temperature of the melt-kneading is not particularly limited, as long as it is a temperature at which the thermoplastic resin used can be melted. The melt-kneading can be carried out by a known method, and it is not particularly limited. For example, it can be carried out by use of a kneader such as a uniaxial or biaxial kneader.

The form of the resin molded body of the present disclosure is not particularly limited and may be any kind of moldable form. The resin molded body can be in any form such as a sheet form, a film form, a plate form, a tube form, and various kinds of other three-dimensional forms.

As the applications of the resin composition and resin molded body of the present disclosure, examples include, but are not limited to, those in which the resin composition or the resin molded body can be used, among the above-mentioned applications of the hollow particles of the present disclosure. Since the resin composition and resin molded body of the present disclosure are excellent in weight reduction and heat insulation properties, they can be used in materials that are required to be lightweight and heat insulation materials in various kinds of fields such as the automotive field, the electronics field, the electric field, the architecture field, the aviation field and the space field.

Examples

Hereinbelow, the present disclosure is described more specifically using examples and comparative examples. However, the present disclosure is not limited to these examples. Also, "part(s)" and "%" are on a mass basis unless otherwise specified.

[Example 1]

(1) Mixture liquid preparation step

First, the following materials were mixed to produce an oil phase.

Divinylbenzene: 37.15 parts
Ethylvinylbenzene: 1.55 parts
t-Butylperoxy diethylacetate (oil-soluble polymerization initiator): 0.89 parts
Hydrophobic solvent: Heptane 61.3 parts

Meanwhile, in a stirring tank, at room temperature, an aqueous solution in which 13.72 parts of sodium hydroxide (an alkali metal hydroxide) was dissolved in 55 parts of deionized water, was gradually added under stirring to an aqueous solution in which 19.59 parts of magnesium chloride (a water-soluble polyvalent metal salt) was dissolved in 225 parts of deionized water, thereby preparing a magnesium hydroxide (sparingly water-soluble metal hydroxide) colloidal dispersion (magnesium hydroxide: 4 parts). The dispersion was used as an aqueous phase.

The obtained aqueous phase and oil phase were mixed, thereby preparing a mixture liquid.

(2) Suspension step

The mixture liquid obtained in the mixture liquid preparation step was suspended by stirring with a disperser (product name: HOMOMIXER, manufactured by: PRIMIX Corporation) at a rotational frequency of 4,000 rpm for one minute, thereby preparing a suspension in which droplets of a monomer composition including the hydrophobic solvent were dispersed in water.

(3) Polymerization step

A polymerization reaction was carried out by stirring the suspension obtained in the suspension step for one and half hours at a temperature of 65°C in a nitrogen atmosphere, thereby obtaining a precursor composition such that precursor particles including the hydrophobic solvent were dispersed in water.

(4) Washing and solvent removal step

The precursor composition obtained by the polymerization step was washed with dilute sulfuric acid (25°C, 10 minutes) to bring the pH of the composition to 5.5 or less. Next, water was separated therefrom by filtration. Then, 200 parts of deionized water was added to reslurry the resultant. This washing and filtration treatment was repeatedly performed several times at room temperature (25°C), thereby obtaining the reslurried precursor composition.

Then, in a temperature condition of 92°C, nitrogen was bubbled into the precursor composition at 4 L/min for 72 hours, thereby removing the included hydrophobic solvent from the precursor particles. Accordingly, hollow particles in which the hollow portion was filled with nitrogen, were obtained.

Then, the hollow particles were obtained by filtration separation. In a nitrogen atmosphere, the obtained hollow particles were subjected to heat drying at 40°C for 12 hours to remove the contained water from the shell, thereby obtaining the hollow particles in which the hollow portion was filled with nitrogen.

[Example 2]

The hollow particles of Example 2 were obtained in the same manner as Example 1, except that in "(1) Mixture liquid preparation step", the amount of the added magnesium chloride was changed to 7.59 parts, and the amount of the added sodium hydroxide was changed to 5.49 parts.

[Examples 3 to 10]

The hollow particles of Examples 3 to 10 were obtained in the same manner as Example 1, except that in "(1) Mixture liquid preparation step", the type and amount of the added polymerizable monomer and those of the added hydrophobic solvent were changed according to Table 1; moreover, in Examples 3, 8 and 9, the amount of the added magnesium chloride and that of the added sodium hydroxide were changed to 7.59 parts and 5.49 parts, respectively.

[Comparative Examples 1 to 4]

The hollow particles of Comparative Examples 1 to 4 were obtained in the same manner as Example 1, except that in "(1) Mixture liquid preparation step", the type and amount of the added polymerizable monomer and those of the added hydrophobic solvent were changed according to Table 1; moreover, after "(4) Washing and solvent removal step", the hollow particles were further dried by heat treatment for 12 hours in a vacuum dryer in a vacuum condition at 200°C.

[Evaluation]

The hollow particles obtained in the examples and the comparative examples were measured and evaluated as follows. The results are shown in Table 1.

1. Volume average particle diameter of the hollow particles

The volume average particle diameter of the hollow particles was measured with a particle size distribution measuring device (product name: MULTISIZER 4e, manufactured by: Beckman Coulter, Inc.) The measurement condition was as follows.

Aperture diameter: 50 um
Dispersion medium: ISOTON II (product name)
Concentration: 10%
Number of the measured hollow particles: 100,000 particles

More specifically, 0.2 g of the sample hollow particles were put in a beaker. As a dispersant, a surfactant aqueous solution (product name: DRIWEL, manufactured by: Fujifilm Corporation) was added thereto. In addition, 2 mL of the dispersion medium was added to wet the hollow particles. Then, 10 mL of the dispersion medium was added thereto. The mixture was dispersed for one minute with an ultrasonic disperser. Then, the measurement with the above-described particle size measuring device was carried out.

2. Density and void ratio of the hollow particles

In the examples, the following hollow particles were prepared as measurement samples: the hollow particles obtained by the above-described steps of the examples, and the hollow particles obtained by performing, on the hollow particles of the examples, vacuum drying at 200°C further as in the comparative examples.
In the comparative examples, the following hollow particles were prepared as measurement samples: the hollow particles obtained by the above-described steps of the comparative examples, and the hollow particles collected after the heat drying at 40°C, that is, the hollow particles collected before the vacuum drying at 200°C.
Hereinafter, the hollow particles after the heat drying at 40°C may be referred to as "hollow particles after low-temperature drying", and the hollow particles after the vacuum drying at 200°C may be referred to as "hollow particles after high-temperature drying".

2-1. Measurement of the apparent density of the hollow particles

First, approximately 30 $cm^3$ of the hollow particles were introduced into a measuring flask with a volume of 100 $cm^3$, and the mass of the introduced hollow particles was precisely weighed. Next, the measuring flask in which the hollow particles were introduced, was precisely filled with isopropanol up to the marked line while care was taken so that air bubbles did not get in. The mass of the isopropanol added to the measuring flask was precisely weighed, and the apparent density $D_1$ (g/$cm^3$) of the hollow particles was calculated by the formula (I) described above.

For the examples, the apparent density $D_1$ shown in Table 1 is a result of measuring the hollow particles after low-temperature drying. For the comparative examples, the apparent density $D_1$ shown in Table 1 is a result of measuring the hollow particles after high-temperature drying.

2-2. Measurement of the true density of the hollow particles

The hollow particles were pulverized in advance; approximately 10 g of the pulverized hollow particles were introduced into a measuring flask with a volume of 100 $cm^3$; and the mass of the introduced pulverized particles was precisely weighed.

Then, similarly to the measurement of the apparent density mentioned above, isopropanol was added to the measuring flask; the mass of the isopropanol was precisely weighed; and the true density $D_0$ (g/$cm^3$) of the hollow particles was calculated by the formula (II) described above.

2-3. Calculation of void ratio

The void ratio of the hollow particles was calculated by the above-described formula (III) from the apparent density $D_1$ and the true density $D_0$.

The void ratio of the hollow particles after low-temperature drying and the void ratio of the hollow particles after high-temperature drying, were obtained.

3. Specific surface area of the hollow particles

For the measurement of the theoretical BET specific surface area SA(t), the measured BET specific surface area SA(m) and the ratio of the measured BET specific surface area SA(m) to the theoretical BET specific surface area SA(t), the hollow particles after low-temperature drying were prepared as the measurement sample in each of the examples, and the hollow particles after high-temperature drying were prepared as the measurement sample in each of the comparative examples.

3-1. Theoretical BET specific surface area SA(t)

The theoretical BET specific surface area SA(t) of the hollow particles was calculated by the following formula (A) from the above-obtained apparent density $D_1$ and volume average particle diameter Dv of the hollow particles.

$$SA(t) = 6/(Dv \times D_1) \quad Formula\ (A)$$

Formula (A)

3-2. Measured BET specific surface area SA(m)

Using a full automatic BET specific surface area analyzer (product name: MACSORB HM MODEL-1208, manufactured by: Mountech Co., Ltd.), the BET specific surface area of the hollow particles was measured by the nitrogen adsorption method (BET).

3-3. SA(m)/SA(t) ratio

From the theoretical BET specific surface area SA(t) and measured BET specific surface area SA(m) of the hollow particles, the ratio (SA(m)/SA(t)) was obtained.

4. Residual solvent amount

For the measurement of the residual solvent amount, the hollow particles after low-temperature drying were prepared as the measurement sample in both the examples and the comparative examples. The residual solvent amount in the measurement sample was measured by the following method.

First, approximately 100 mg of the measurement sample (the hollow particles) were put into a 30 mL screw cap glass bottle and precisely weighed. Subsequently, approximately 10 g of tetrahydrofuran (THF) was put into the glass bottle and precisely weighed. The mixture in the glass bottle was stirred for 1 hour with a stirrer, and the hydrophobic solvent contained in the hollow particles was extracted. The stirring was stopped; the resin component of the hollow particles insoluble in THF was precipitated; then, a filter (product name: MEMBRANE FILTER 25JP020AN, manufactured by: Advantec Co., Ltd.) was installed at a syringe barrel; and the precipitate was filtered out to obtain a sample liquid. The sample liquid was injected into and analyzed by gas chromatography (GC). The amount (ppm by mass) of the residual solvent per unit mass contained in the hollow particles, was found from a peak area of GC and a calibration curve created in advance. Detailed analysis conditions were as follows.

(Analysis conditions)

Apparatus: GC-2010 (manufactured by Shimadzu Corporation)
Column: DB-5 (manufactured by Agilent Technologies Japan, Ltd.)
Membrane thickness 0.25 um, Inner diameter 0.25 mm, Length 30 m
Detector: FID
Carrier gas: Nitrogen (linear velocity: 28.8 cm/sec)
Temperature of the injection port: 200°C
Temperature of the detector: 250°C
Temperature of the oven: Raised from 40°C to 230°C at a rate of 10°C/minute, and held at 230°C for 2 minutes
Amount of sampling: 2 $\mu$L

5. Pressure resistance

For the evaluation of pressure resistance, the hollow particles obtained by the above-described steps of the examples and comparative examples, were used as the measurement sample. The pressure resistance of the measurement sample (hollow particles) was evaluated by the following method.

First, 90 parts of polypropylene (manufactured by Mitsubishi Chemical Corporation, product name: MALB, specific gravity: 0.90 g/cm$^3$) as the thermoplastic resin and 10 parts of the hollow particles were mixed by a blender. Next, a resin composition thus obtained was kneaded by a biaxial kneader (product name: TEM-35B, manufactured by: Toshiba Machine Co., Ltd.) in the following kneading condition, extruded and then pelletized, thereby obtaining pellets of the resin composition.

<Kneading condition>

Screw diameter: 37 mm, L/D = 32
Screw rotational frequency: 250 rpm
Resin temperature: 190°C
Feed rate: 20 kg/h

The obtained pellets of the resin composition were dried by heating at 80°C for 6 hours. Then, using a hot press machine, the pellets were subjected to injection molding in the following molding condition, thereby obtaining a molded body (diameter: 30 mm, thickness: 5 mm).

<Injection molding condition>

First, 2 g of the obtained pellets of the resin composition were put in a mold (diameter 30 mm) and melted by heating to 200°C. The melted resin composition was pressurized at a pressure of 50 MPa, kept for one minute, and then cooled to room temperature. Then, a molded body thus formed was remove from the mold.

The residual void ratio was calculated by the following formula (C), using the following a, b and c.

a: The specific gravity of the molded body after the injection molding.
b: The specific gravity (a calculated value) of the molded body with the premise that the voids were maintained.
c: The specific gravity (a calculated value) of the molded body with the premise that all the hollow particles collapsed.

$$\text{Residual void ratio (\%)} = \{(c-a)/(c-b)\}\times 100 \quad \text{Formula (C)}$$

The specific gravity a of the molded body after the injection molding was measured by the underwater replacement method according to JIS K 7112.

The specific gravity b of the molded body with the premise that the voids were maintained, was calculated by the following formula (D).

$$b = 1/\{(P_A/P_G)+(R_A/R_G)\} \quad \text{Formula (D)}$$

In the calculation formula for obtaining the b, $P_A$ is the amount of the added hollow particles; $P_G$ is the specific gravity (apparent density $D_1$) of the hollow particles; $R_A$ is the amount of the added thermoplastic resin; and $R_G$ is the specific gravity of the thermoplastic resin.

The specific gravity c of the molded body with the premise that all the hollow particles collapsed, was calculated by the following formula (E).

$$c = [R_G \times R_A + \{D_0 \times P_A \times (1-P_V/100)\}]/\{R_A + P_A \times (1-P_V/100)\} \quad \text{Formula (E)}$$

In the calculation formula for obtaining the c, $R_A$ is the amount of the added thermoplastic resin; $R_G$ is the specific gravity of the thermoplastic resin; $D_0$ is the true density $D_0$ of the hollow particles; $P_A$ is the amount of the added hollow particles; and $P_V$ is the void ratio (%) of the hollow particles.

Based on the residual void ratio of the hollow particles in the molded body after the injection molding, the pressure resistance of the hollow particles was evaluated by the following evaluation criteria.

(Pressure resistance evaluation criteria)

A: The residual void ratio was 90% or more.
B: The residual void ratio was 60% or more and less than 90%.
C: The residual void ratio was 20% or more and less than 60%.
D: The residual void ratio was less than 20%.

6. Measurement of the relative permittivity (Dk) and dielectric dissipation factor (Df) of the hollow particles

For the measurement of the relative permittivity (Dk) and the dielectric dissipation factor (Df), the hollow particles obtained by the above-described steps of the examples and the comparative examples, were used as the measurement sample. Using a perturbation-type measuring device (manufactured by: AET Inc., model: ADMS01Nc), the relative permittivity and dielectric dissipation factor of the hollow particles were measured at a frequency of 1 GHz and at room temperature (25°C).

[Table 1]

Table 1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polymerizable monomer | Divinylbenzene | 37.15 | 37.15 | 24.38 | 31.58 | 4.37 | 8.74 | 32.35 | 3.13 | | 25.88 |
| | Ethylvinylbenzene | 1.55 | 1.55 | 14.32 | 1.32 | 0.18 | 0.36 | 1.35 | 0.13 | | 1.08 |
| | Styrene | | | | | | | | | 4.55 | |
| | Ethylene glycol dimethacrylate | | | | | 31.85 | 27.3 | | 29.34 | 40.95 | |
| | Pentaerythritol tetraacrylate | | | | | 9.1 | 9.1 | | | | |
| | Tricyclodecane dimethanol dimethacrylate | | | | | | | | | | |
| | t-Butyl aminoethyl methacrylate | | | | | | | 5 | | | |
| Hydrophobic solvent | Heptane | 61.3 | 61.3 | 61.3 | 67.1 | | | 61.3 | | | 73.04 |
| | Hexane | | | | | | | | 67.4 | | |
| | Cyclohexane | | | | | 54.5 | 54.5 | | | 54.5 | |
| Volume average particle diameter (Dv) ($\mu$m) | | 4.1 | 7.2 | 3.4 | 3.1 | 80 | 6.7 | 3.4 | 26.0 | 8.2 | 2.5 |
| Void ratio (%) | After low-temperature drying | 70 | 69 | 68 | 75 | 63 | 63 | 69 | 63 | 63 | 80 |
| | After high-temperature drying | 70 | 70 | 69 | 75 | 64 | 64 | 69 | 64 | 65 | 80 |
| Apparent density ($D_1$) | | 0.306 | 0.317 | 0.320 | 0.254 | 0.447 | 0.443 | 0.316 | 0.442 | 0.440 | 0.202 |
| Theoretical specific surface area SA(t) $6/(Dv \times D_1)$ | | 4.78 | 2.63 | 5.51 | 7.62 | 1.68 | 2.02 | 5.58 | 0.52 | 1.66 | 11.88 |
| Measured BET specific surface area SA(m) ($m^2$/g) | | 329.08 | 30.45 | 25.70 | 168.17 | 6.40 | 9.69 | 201.20 | 2.99 | 5.22 | 330.01 |

28

EP 4 488 300 A1

(continued)

| | Example 1 | Example 2 | Example 3 | Example 4 | Example 5 | Example 6 | Example 7 | Example 8 | Example 9 | Example 10 |
|---|---|---|---|---|---|---|---|---|---|---|
| SA(m)/SA(t) | 68.81 | 11.58 | 4.66 | 2207 | 3.81 | 4.79 | 36.03 | 5.73 | 3.14 | 27.78 |
| Residual solvent amount (ppm) | 313 | 865 | 451 | 288 | 911 | 832 | 912 | 516 | 992 | 288 |
| Pressure resistance | B | A | B | B | A | A | B | B | B | B |
| Relative permittivity @ 1 GHz | 1.36 | 1.36 | 1.37 | 1.31 | 1.41 | 1.40 | 1.38 | 1.38 | 1.39 | 1.25 |
| Dielectric dissipation factor @ 1 GHz | 5.20E-04 | 5.50E-04 | 4.80E-04 | 4.60E-04 | 5.70E-03 | 5.00E-03 | 1.30E-03 | 5.90E-04 | 4.90E-03 | 3.89E-04 |

Table 1-continued

| | | Comparative Example 1 | Comparative Example 2 | Comparative Example 3 | Comparative Example 4 |
|---|---|---|---|---|---|
| Polymerizable monomer | Divinylbenzene | | | | |
| | Ethylvinylbenzene | | | | |
| | Styrene | | | | |
| | Ethylene glycol dimethacrylate | 45.5 | 45.5 | 36.4 | |
| | Pentaerythritol tetra-acrylate | | | 9.1 | |
| | Tricyclodecane di-methanol dimetha-crylate | | | | 45.5 |
| | t-Butyl aminoethyl methacrylate | | | | |
| Hydrophobic solvent | Heptane | | | | 54.5 |
| | Hexane | | | | |
| | Cyclohexane | 54.5 | 54.5 | 54.5 | |
| Volume average particle diameter (Dv) ($\mu$m) | | 11.2 | 3.6 | 12.7 | 22.3 |
| Void ratio (%) | After low-temperature drying | 13 | 11 | 21 | 20 |
| | After high-temperature drying | 65 | 65 | 65 | 64 |
| Apparent density ($D_1$) | | 0.425 | 0.407 | 0.420 | 0.431 |
| Theoretical specific surface area SA(t) $6/(Dv \times D_1)$ | | 1.26 | 4.10 | 1.12 | 0.62 |
| Measured BET specific surface area SA(m) ($m^2$/g) | | 207 | 8.63 | 1.30 | 1.68 |
| SA(m)/SA(t) | | 1.64 | 2.11 | 1.16 | 2.69 |
| Residual solvent amount (ppm) | | 501000 | 491900 | 511100 | 490200 |
| Pressure resistance | | D | D | C | C |
| Relative permittivity @ 1 GHz | | 1.60 | 1.61 | 1.61 | 150 |
| Dielectric dissipation factor @ 1 GHz | | 1.00E-02 | 9.80E-03 | 1.10E-02 | 5.80E-03 |

Table 1 shows the amounts (parts by mass) of the added materials and the measurement or evaluation results.

From the scanning electron microscope observation results and the void ratio value, the hollow particles obtained in the examples and the comparative examples were confirmed to be spherical hollow particles having only one hollow portion. In each of Examples 1 to 10, the percentage of the number of the particles having only one hollow portion was 90% or more.

Also, 3000 particles were randomly selected from the hollow particles obtained in each of Examples 1 to 10. As a result of examination of the selected particles, in all of Examples 1 to 10, the percentage of particles having a circularity of 0.85 or less was 10% by mass or less.

The HSP distance between the crosslinkable monomer and hydrophobic solvent used in Examples 1 to 10, was in a range of from 5.46 to 7.46.

As for the hollow particles obtained in Comparative Examples 1 to 4, the SA(m)/SA(t) ratio was less than 3.0, and the included hydrophobic solvent could not be sufficiently removed from the particles by the low-temperature drying. This is obvious from the following: the amount of the residual hydrophobic solvent remaining in the hollow particles after the low-temperature drying was large, and the void ratio of the hollow particles after the low-temperature drying was low. It is presumed that since a hydrocarbon monomer was not used as the polymerizable monomer, hollow particles having a SA(m)/SA(t) ratio of 3.0 or more were not obtained in Comparative Examples 1 to 4. In Comparative Examples 1 to 4, the hydrophobic solvent could be sufficiently removed from the hollow particles by drying the particles at 200°C. This is obvious from the fact that the void ratio of the hollow particles after the high-temperature drying was high. On the other hand, the pressure resistance and dielectric property of the hollow particles after the high-temperature drying were poor. It is presumed that in Comparative Examples 1 to 4, the shell of the hollow particles was deteriorated by drying at 200°C, thereby deteriorating the pressure resistance and the dielectric property. The relatively good pressure resistance of the hollow particles obtained in Comparative Example 3 is presumed to be because the polymer in the shell contained the difunctional crosslinkable monomer unit in combination with the trifunctional or higher-functional crosslinkable monomer unit. The relatively good pressure resistance of the hollow particles obtained in Comparative Example 4 is presumed to be because, due to the large particle diameter of the hollow particles, the shell was relatively thick.

As for the hollow particles obtained in Examples 1 to 10, since the SA(m)/SA(t) ratio was 3.0 or more, the included hydrophobic solvent could be sufficiently removed from the particles by the low-temperature drying. This is obvious from the following: the amount of the residual hydrophobic solvent remaining in the hollow particles after the low-temperature drying was small, and the void ratio of the hollow particles after the low-temperature drying and the void ratio of the hollow particles after the high-temperature drying were similar values. Also, the pressure resistance and dielectric property of the hollow particles obtained in the examples were excellent. It is presumed that in the examples, the included hydrophobic solvent could be sufficiently removed from the particles by the low-temperature drying, and the deterioration of the shell by drying was suppressed, thereby suppressing the deterioration of the pressure resistance and the dielectric property.

Also, the dielectric property of the hollow particles obtained in Examples 1 to 4, 7 and 10 was excellent because the content of the crosslinkable hydrocarbon monomer unit in the shell was large. Of them, the dielectric property of the hollow particles obtained in Examples 1 to 4 and 10, in each of which the content of the hydrocarbon monomer unit was large, was particularly excellent.

The pressure resistance of the hollow particles obtained in Examples 5 and 6 was excellent since the polymer in the shell contained the difunctional crosslinkable monomer unit in combination with the trifunctional or higher-functional crosslinkable monomer unit.

[Example 11]

First, 100 parts of polypropylene (PP) (manufactured by: Mitsubishi Chemical Corporation, product name: MA1B, specific gravity: 0.90 g/cm$^3$) and 25 parts of the hollow particles obtained in Example 5 were mixed by a blender. Next, a mixture thus obtained was kneaded by a biaxial kneader (product name: TEM-35B, manufactured by: Toshiba Machine Co., Ltd.) in the following kneading condition, extruded and then pelletized, thereby obtaining a pelletized resin composition.

<Kneading condition>

    Screw diameter: 37 mm, L/D = 32
    Screw rotational frequency: 250 rpm
    Resin temperature: 190°C
    Feed rate: 20 kg/h

The obtained pellets were dried by heating at 80°C for 6 hours. Then, using a hot press machine, compression molding was carried out in the following condition, thereby obtaining a sheet-shaped resin molded body (size: 200 mm square, thickness: 2 mm) .

<Compression molding condition>

    Molding temperature: 190°C
    Applied pressure: 8 MPa
    Pressurizing time: 2 minutes

[Examples 12 and 13]

The pelletized resin composition and sheet-shaped resin molded body of Examples 12 and 13 were obtained in the same manner as Example 11, except that the amount of the added hollow particles was changed according to Table 2.

[Example 14 and Comparative Example 5]

The pelletized resin composition and sheet-shaped resin molded body of Example 14 and Comparative Example 5 were obtained in the same manner as Example 11, except that the type of the hollow particles was changed according to Table 2.

[Reference Example 1]

The pelletized resin composition and sheet-shaped resin molded body of Reference Example 1 were obtained in the same manner as Example 11, except that hollow particles were not added.

[Example 15]

At room temperature (25°C), 100 parts of epoxy resin (product name: jER (registered trademark) 825, manufactured by: Mitsubishi Chemical Corporation, specific gravity: 1.20 g/cm$^3$), 4 parts of 2-ethyl-4-methylimidazole (manufactured by: Shikoku Chemicals Corporation) and 25 parts of the hollow particles obtained in Example 5 were dispersed by a planetary centrifugal mixer (product name: KK-250S, manufactured by: Kurabo Industries Ltd.) at a rotation of 1600 rpm and a revolution 1600 rpm for 5 minutes. Then, defoaming was carried out at a revolution of 1700 rpm for one minute, thereby obtaining a resin composition in the form of varnish.
The obtained varnish was poured into a mold and thermally cured at 200°C, thereby obtaining a sheet-shaped resin molded body (size: 200 mm square, thickness: 2 mm).

[Comparative Example 6]

The pelletized resin composition and sheet-shaped resin molded body of Comparative Example 6 were obtained in the same manner as Example 15, except that the type of the hollow particles was changed according to Table 2.

[Reference Example 2]

The pelletized resin composition and sheet-shaped resin molded body of Reference Example 2 were obtained in the same manner as Example 15, except that hollow particles were not added.

[Example 16]

A resin composition in the form of varnish was obtained in the same manner as Example 15.
Next, 30 mL of the obtained varnish was applied to a carbon fiber sheet (manufactured by: Mitsubishi Chemical Corporation, product name: TR3110MS, thickness: 200 um, weight per unit area: 200 g/m$^2$) cut to a size of 300 mm × 200 mm.
The carbon fiber sheet to which the varnish was applied, was hung to cause the excess varnish to fall under its own weight. Then, the sheet was naturally dried in the air, thereby obtaining a prepreg.
The obtained prepreg was dried in a hot air circulation oven at 150°C for 120 minutes, thereby obtaining a resin molded body.

[Comparative Example 7]

The pelletized resin composition and sheet-shaped resin molded body of Comparative Example 7 were obtained in the same manner as Example 16, except that the type of the hollow particles was changed according to Table 2.

[Reference Example 3]

The pelletized resin composition and sheet-shaped resin molded body of Reference Example 3 were obtained in the same manner as Example 16, except that hollow particles were not added.

[Example 17]

A resin composition in the form of varnish was obtained in the same manner as Example 15.

Next, 30 mL of the obtained varnish was applied to a glass fibers sheet (manufactured by: Nitto Boseki Co., Ltd., product name: NE GLASS) cut to a size of 300 mm × 200 mm.

The glass fibers sheet to which the varnish was applied, was hung to cause the excess varnish to fall under its own weight. Then, the sheet was naturally dried in the air, thereby obtaining a prepreg.

The obtained prepreg was dried in a hot air circulation oven at 150°C for 120 minutes, thereby obtaining a resin molded body.

[Example 18 and Comparative Example 8]

The pelletized resin composition and sheet-shaped resin molded body of Example 18 and Comparative Example 8 were obtained in the same manner as Example 17, except that the type of the hollow particles was changed according to Table 2.

[Reference Example 4]

The pelletized resin composition and sheet-shaped resin molded body of Reference Example 4 were obtained in the same manner as Example 17, except that hollow particles were not added.

[Example 19]

First, 100 parts of polyphenylene ether (PPE) (manufactured by: Asahi Kasei Corporation, product name: XYRON 200H, specific gravity: 1.05 g/cm$^3$) and 25 parts of the hollow particles obtained in Example 5 were mixed by a blender. Next, a mixture thus obtained was kneaded by a biaxial kneader (product name: TEM-35B, manufactured by: Toshiba Machine Co., Ltd.) in the following kneading condition, extruded and then pelletized, thereby obtaining a pelletized resin composition.

<Kneading condition>

Screw diameter: 37 mm, L/D = 32
Screw rotational frequency: 250 rpm
Resin temperature: 250°C
Feed rate: 20 kg/h

The obtained pellets were dried by heating at 80°C for 6 hours. Then, using a hot press machine, compression molding was carried out in the following condition, thereby obtaining a sheet-shaped resin molded body (size: 200 mm square, thickness: 2 mm) .

<Compression molding condition>

Molding temperature: 250°C
Applied pressure: 8 MPa
Pressurizing time: 2 minutes

[Example 20 and Comparative Example 9]

The pelletized resin composition and sheet-shaped resin molded body of Example 20 and Comparative Example 9 were obtained in the same manner as Example 19, except that the type of the hollow particles was changed according to Table 2.

[Reference Example 5]

The pelletized resin composition and sheet-shaped resin molded body of Reference Example 5 were obtained in the same manner as Example 19, except that hollow particles were not added.

[Example 21]

First, 100 parts of a liquid crystal polymer (LCP) (manufactured by: Ueno Fine Chemicals Industry, Ltd., product name: 2125G, specific gravity: 1.62 $g/cm^3$) and 25 parts of the hollow particles obtained in Example 5 were mixed by a blender. Next, a mixture thus obtained was kneaded by a biaxial kneader (product name: TEM-35B, manufactured by: Toshiba Machine Co., Ltd.) in the following kneading condition, extruded and then pelletized, thereby obtaining a pelletized resin composition.

<Kneading condition>

Screw diameter: 37 mm, L/D = 32
Screw rotational frequency: 250 rpm
Resin temperature: 350°C
Feed rate: 20 kg/h

The obtained pellets were dried by heating at 80°C for 6 hours. Then, using a hot press machine, compression molding was carried out in the following condition, thereby obtaining a sheet-shaped resin molded body (size: 200 mm square, thickness: 2 mm) .

<Compression molding condition>

Molding temperature: 350°C
Applied pressure: 8 MPa
Pressurizing time: 2 minutes

[Comparative Example 10]

The pelletized resin composition and sheet-shaped resin molded body of Comparative Example 10 were obtained in the same manner as Example 21, except that the type of the hollow particles was changed according to Table 2.

[Reference Example 6]

The pelletized resin composition and sheet-shaped resin molded body of Reference Example 6 were obtained in the same manner as Example 21, except that hollow particles were not added.

[Example 22]

First, 100 parts of polyphenylene sulfide (PPS) (manufactured by: TEIJIN Ltd., product name: E2000TJ, specific gravity: 1.35 $g/cm^3$) and 25 parts of the hollow particles obtained in Example 5 were mixed by a blender. Next, a mixture thus obtained was kneaded by a biaxial kneader (product name: TEM-35B, manufactured by: Toshiba Machine Co., Ltd.) in the following kneading condition, extruded and then pelletized, thereby obtaining a pelletized resin composition.

<Kneading condition>

Screw diameter: 37 mm, L/D = 32
Screw rotational frequency: 250 rpm

Resin temperature: 300°C
Feed rate: 20 kg/h

The obtained pellets were dried by heating at 80°C for 6 hours. Then, using a hot press machine, compression molding was carried out in the following condition, thereby obtaining a sheet-shaped resin molded body (size: 200 mm square, thickness: 2 mm) .

<Compression molding condition>

Molding temperature: 300°C
Applied pressure: 8 MPa
Pressuring time: 2 minutes

[Comparative Example 11]

The pelletized resin composition and sheet-shaped resin molded body of Comparative Example 11 were obtained in the same manner as Example 22, except that the type of the hollow particles was changed according to Table 2.

[Reference Example 7]

The pelletized resin composition and sheet-shaped resin molded body of Reference Example 7 were obtained in the same manner as Example 22, except that hollow particles were not added.

[Example 23]

At room temperature (25°C), 100 parts of unsaturated polyester (unsaturated PES) precursor (manufactured by: Resonac Corporation, product name: RIGOLAC 158BQT) and 25 parts of the hollow particles obtained in Example 5 were dispersed by a planetary centrifugal mixer (product name: KK-250S, manufactured by: Kurabo Industries Ltd.) at a rotation of 1600 rpm and a revolution 1600 rpm for 5 minutes. Then, defoaming was carried out at a revolution of 1700 rpm for one minute, thereby obtaining a resin composition in the form of varnish.
The obtained varnish was poured into a mold and thermally cured at 200°C, thereby obtaining a sheet-shaped resin molded body (size: 200 mm square, thickness: 2 mm).

[Example 24 and Comparative Example 12]

The pelletized resin composition and sheet-shaped resin molded body of Example 24 and Comparative Example 12 were obtained in the same manner as Example 23, except that the type of the hollow particles was changed according to Table 2.

[Reference Example 8]

The pelletized resin composition and sheet-shaped resin molded body of Reference Example 8 were obtained in the same manner as Example 23, except that hollow particles were not added.

[Evaluation]

The resin molded bodies obtained in the examples, the comparative examples and the reference examples were measured and evaluated as follows. The results are shown in Table 2.

1. Weight reduction rate

Each resin molded body was cut into a 10 mm square piece having a thickness of 2 mm, thereby obtaining a sample. Using the sample, the specific gravity was measured by the underwater replacement method according to JIS K 7112:1999.
The weight reduction rate (%) was calculated by the following formula (1) from the specific gravity ($SG_1$) of the

resin molded body obtained in the example or the comparative example and the specific gravity (SGo) of the resin molded body obtained in the reference example that used the same matrix resin (and the same reinforcing fibers in the case of containing reinforcing fibers).

$$\text{Weight reduction rate (\%)} = \{(SG_0-SG_1)/SG_0\}\times100 \quad \text{Formula (1)}$$

Based on the weight reduction rate, the weight reduction property of the resin molded body was evaluated by the following evaluation criteria.

(Weight reduction property evaluation criteria)

A: The weight reduction rate was 15% or more.
B: The weight reduction rate was 10% or more and less than 15%.
C: The weight reduction rate was 5% or more and less than 10%.
D: The weight reduction rate was less than 5%.

2. Thermal conductivity

Each resin molded body was cut into a 100 mm × 50 mm piece having a thickness of 2 mm, thereby obtaining a sample. Using the sample, the thermal conductivity (mW/mK) was measured by the plate heat flow meter method according to JIS A1412-2.
The thermal conductivity decrease rate (%) was calculated by the following formula (2) from the thermal conductivity ($TC_1$) of the resin molded body obtained in the example or the comparative example and the thermal conductivity ($TC_0$) of the resin molded body obtained in the reference example that used the same matrix resin (and the same reinforcing fibers in the case of containing reinforcing fibers).

Thermal conductivity decrease rate (%) = $\{(TC_0- TC_1)/TC_0\}\times100$ Formula (2)

Based on the thermal conductivity decrease rate, the thermal insulation property of the resin molded body was evaluated by the following evaluation criteria.

(Thermal insulation property evaluation criteria)

A: The thermal conductivity decrease rate was 30% or more.
B: The thermal conductivity decrease rate was 20% or more and less than 30%.
C: The thermal conductivity decrease rate was 5% or more and less than 20%.
D: The thermal conductivity decrease rate was less than 5%.

[Table 2]

Table 2

| | | Example 11 | Example 12 | Example 13 | Example 14 | Comparative Example 5 | Reference Example 1 |
|---|---|---|---|---|---|---|---|
| Matrix resin | Type | PP | PP | PP | PP | PP | PP |
| | Added amount (parts) | 100 | 100 | 100 | 100 | 100 | 100 |

(continued)

| | | Example 11 | Example 12 | Example 13 | Example 14 | Comparative Example 5 | Reference Example 1 |
|---|---|---|---|---|---|---|---|
| Hollow particles | Type | Example 5 | Example 5 | Example 5 | Example 4 | Comparative Example 1 | - |
| | Added amount (parts) | 25 | 18 | 12 | 25 | 25 | - |
| Reinforcing fibers | Type | - | - | - | - | - | - |
| | Content (parts) | - | - | - | - | - | - |
| Molded body | Weight reduction rate (%) | A | B | C | A | C | - |
| | Specific gravity | 0.75 | 0.78 | 0.82 | 0.59 | 0.85 | 0.90 |
| | Thermal conductivity decrease rate (%) | B | B | C | A | C | - |
| | Thermal conductivity (W/m·K) | 0.098 | 0.104 | 0.110 | 0.079 | 0.120 | 0.130 |

Table 2-continued (1)

| | | Example 15 | Comparative Example 6 | Reference Example 2 | Example 16 | Comparative Example 7 | Reference Example 3 |
|---|---|---|---|---|---|---|---|
| Matrix resin | Type | Epoxy | Epoxy | Epoxy | Epoxy | Epoxy | Epoxy |
| | Added amount (parts) | 100 | 100 | 100 | 100 | 100 | 100 |
| Hollow particles | Type | Example 5 | Comparative Example 1 | - | Example 5 | Comparative Example 1 | - |
| | Added amount (parts) | 25 | 25 | - | 25 | 25 | - |
| Reinforcing fibers | Type | - | - | - | Carbon fibers | Carbon fibers | Carbon fibers |
| | Content (parts) | - | - | - | 125 | 125 | 100 |

(continued)

|  | | Example 15 | Comparative Example 6 | Reference Example 2 | Example 16 | Comparative Example 7 | Reference Example 3 |
|---|---|---|---|---|---|---|---|
| Molded body | Weight reduction rate (%) | A | B | - | B | D | - |
| | Specific gravity | 0.89 | 1.07 | 1.20 | 1.345 | 1.435 | 150 |
| | Thermal conductivity decrease rate (%) | A | C | - | C | C | - |
| | Thermal conductivity (W/m·K) | 0.122 | 0.168 | 0.180 | 1006 | 1.008 | 1090 |

Table 2-continued (2)

|  | | Example 17 | Example 18 | Comparative Example 8 | Reference Example 4 |
|---|---|---|---|---|---|
| Matrix resin | Type | Epoxy | Epoxy | Epoxy | Epoxy |
| | Added amount (parts) | 100 | 100 | 100 | 100 |
| Hollow particles | Type | Example 5 | Example 4 | Comparative Example 1 | - |
| | Added amount (parts) | 25 | 25 | 25 | - |
| Reinforcing fibers | Type | Glass fibers | Glass fibers | Glass fibers | Glass fibers |
| | Content (parts) | 125 | 125 | 125 | 100 |
| Molded body | Weight reduction rate (%) | C | B | D | - |
| | Specific gravity | 1.595 | 1.495 | 1.685 | 1.75 |
| | Thermal conductivity decrease rate (%) | C | C | C | - |
| | Thermal conductivity (W/m·K) | 0.506 | 0.505 | 0.508 | 0.590 |

Table 2-continued (3)

|  | | Example 19 | Example 20 | Comparative Example 9 | Reference Example 5 |
|---|---|---|---|---|---|
| Matrix resin | Type | PPE | PPE | PPE | PPE |
| | Added amount (parts) | 100 | 100 | 100 | 100 |
| Hollow particles | Type | Example 5 | Example 4 | Comparative Example 1 | - |
| | Added amount (parts) | 25 | 25 | 25 | - |

(continued)

| | | Example 19 | Example 20 | Comparative Example 9 | Reference Example 5 |
|---|---|---|---|---|---|
| Molded body | Weight reduction rate (%) | A | A | D | - |
| | Specific gravity | 0.81 | 0.64 | 1.03 | 1.05 |
| | Thermal conductivity decrease rate (%) | A | A | D | - |
| | Thermal conductivity (W/m·K) | 0.096 | 0.159 | 0.281 | 0.290 |

Table 2-continued (4)

| | | Example 21 | Comparative Example 10 | Reference Example 6 | Example 22 | Comparative Example 11 | Reference Example 7 |
|---|---|---|---|---|---|---|---|
| Matrix resin | Type | LCP | LCP | LCP | PPS | PPS | PPS |
| | Added amount (parts) | 100 | 100 | 100 | 100 | 100 | 100 |
| Hollow particles | Type | Example 5 | Comparative Example 1 | - | Example 5 | Comparative Example 1 | - |
| | Added amount (parts) | 25 | 25 | - | 25 | 25 | - |
| Molded body | Weight reduction rate (%) | A | D | - | A | D | - |
| | Specific gravity | 103 | 1.62 | 1.62 | 0.94 | 1.35 | 1.35 |
| | Thermal conductivity decrease rate (%) | A | D | - | A | D | - |
| | Thermal conductivity (W/m·K) | 0.266 | 0.506 | 0.510 | 0.180 | 0.288 | 0.290 |

Table 2-continued (5)

| | | Example 23 | Example 24 | Comparative Example 12 | Reference Example 8 |
|---|---|---|---|---|---|
| Matrix resin | Type | Unsaturated PES | Unsaturated PES | Unsaturated PES | Unsaturated PES |
| | Added amount (parts) | 100 | 100 | 100 | 100 |
| Hollow particles | Type | Example 5 | Example 4 | Comparative Example 1 | - |
| | Added amount (parts) | 25 | 25 | 25 | - |

(continued)

| | | Example 23 | Example 24 | Comparative Example 12 | Reference Example 8 |
|---|---|---|---|---|---|
| Molded body | Weight reduction rate (%) | A | A | C | - |
| | Specific gravity | 0.89 | 0.69 | 1.12 | 1.20 |
| | Thermal conductivity decrease rate (%) | A | A | C | - |
| | Thermal conductivity (W/m·K) | 0.122 | 0.100 | 0.167 | 0.180 |

The content of the reinforcing fibers shown in Table 2 is the content of the reinforcing fibers with respect to the total (100 parts by mass) of the hollow particles and the matrix resin.

As a result of comparing performances between the resin molded bodies using the same type of matrix resin (and the same type of reinforcing fibers in the case of adding the reinforcing fibers), the weight reduction property and thermal insulation property of the resin molded bodies of Examples 11 to 24 containing the hollow particles obtained in Example 5 or 4, were excellent compared with the resin molded bodies of Comparative Examples 5 to 12 containing the hollow particles obtained in Comparative Example 1.

Also, Examples 11 to 13 showed that the weight reduction property and the thermal insulation property improve as the amount of the hollow particles contained in the resin composition increases.

As a result of comparing Examples 13 and 14, the weight reduction property and thermal insulation property of the resin molded body of Example 14 were better. The reason is presumed as follows: since the pressure resistance of the hollow particles used in Example 14 (the hollow particles obtained in Example 4) was better than that of the hollow particles used in Example 13 (the hollow particles obtained in Example 5), the voids in the interior of the hollow particles in the resin molded body of Example 14 were more easily maintained.

From the results of Example 16, Comparative Example 7 and Reference Example 3, and from the results of Example 17, Example 18, Comparative Example 8 and Reference Example 4, it was revealed that even when the reinforcing fibers were contained in the resin composition, the effect of improving the weight reduction property and the thermal insulation property by the hollow particles of the present disclosure, were obtained.

Reference Signs List

1. Aqueous medium
2. Low polarity material
4a. Hydrophobic solvent
4b. Material not containing hydrophobic solvent
6. Shell
7. Hollow portion
8. Monomer composition droplet
9. Precursor particle
10. Hollow particle

## Claims

1. Hollow particles which comprise a shell containing a resin and a hollow portion surrounded by the shell,

   wherein a volume average particle diameter Dv is 1.0 $\mu$m or more and 30.0 $\mu$m or less;
   wherein the hollow particles have only one hollow portion in an interior thereof; and
   wherein a ratio (SA(m)/SA(t)) of a measured BET specific surface area SA(m) of the hollow particles to a theoretical BET specific surface area SA(t) calculated from an apparent density $D_1$ of the hollow particles and the volume average particle diameter Dv, is 3.0 or more.

2. The hollow particles according to Claim 1, wherein the shell contains, as the resin, a polymer containing a hydrocarbon monomer unit at a content of 10 parts by mass or more in 100 parts by mass of all monomer units.

3. The hollow particles according to Claim 2, wherein the polymer contains a crosslinkable hydrocarbon monomer unit at a content of more than 50 parts by mass in 100 parts by mass of all monomer units.

4. The hollow particles according to Claim 2 or 3, wherein the polymer contains a crosslinkable monomer unit at a content of more than 50 parts by mass in 100 parts by mass of all monomer units, and contains a difunctional crosslinkable monomer unit derived from a difunctional crosslinkable monomer and a trifunctional or higher-functional crosslinkable monomer unit derived from a trifunctional or higher-functional crosslinkable monomer.

5. The hollow particles according to any one of Claims 1 to 4, wherein a void ratio is 50% or more.

6. A resin composition comprising the hollow particles defined by any one of Claims 1 to 5 and a matrix resin.

7. The resin composition according to Claim 6, wherein at least one kind of resin selected from the group consisting of polyethylene, polypropylene, polystyrene, polyurethane resin, epoxy resin, acrylonitrile-butadiene-styrene (ABS) resin, poly(meth)acrylate, polycarbonate, polyamide, polyimide, polyphenylene ether, polyphenylene sulfide, polyester, polytetrafluoroethylene, maleimide resin, bismaleimide triazine resin, liquid crystalline polyester resin, phenolic resin, vinyl ester resin, unsaturated polyester resin, cyanate ester resin, polyetherketoneketone resin and polyetherimide resin, is contained as the matrix resin.

8. The resin composition according to Claim 6 or 7, further comprising reinforcing fibers.

9. The resin composition according to Claim 8, wherein a content of the reinforcing fibers is from 5 parts by mass to 200 parts by mass, with respect to a total (100 parts by mass) of the hollow particles and the matrix resin.

10. The resin composition according to Claim 8 or 9, wherein at least one kind of fibers selected from carbon fibers and glass fibers are contained as the reinforcing fibers.

11. The resin composition according to any one of Claims 6 to 10, wherein a content of the hollow particles is from 5 parts by mass to 30 parts by mass, with respect to 100 parts by mass of the matrix resin.

12. A resin molded body obtained from the resin composition defined by any one of Claims 6 to 11.

[FIG. 1]

(1)

(2)

(3)

(4)

## INTERNATIONAL SEARCH REPORT

International application No.

**PCT/JP2023/006624**

### A. CLASSIFICATION OF SUBJECT MATTER

***C08F 12/00***(2006.01)i; ***C08F 212/00***(2006.01)i; ***B01J 13/02***(2006.01)i
FI: B01J13/02; C08F212/00; C08F12/00

According to International Patent Classification (IPC) or to both national classification and IPC

### B. FIELDS SEARCHED

Minimum documentation searched (classification system followed by classification symbols)

C08F12/00; C08F212/00; B01J13/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/085189 A1 (SEKISUI KASEI CO., LTD.) 06 May 2021 (2021-05-06) <br> claims, examples | 1-12 |
| A | WO 2020/054816 A1 (SEKISUI KASEI CO., LTD.) 19 March 2020 (2020-03-19) <br> entire text, all drawings | 1-12 |
| A | JP 2016-132762 A (KONICA MINOLTA, INC.) 25 July 2016 (2016-07-25) <br> entire text, all drawings | 1-12 |

☐ Further documents are listed in the continuation of Box C.      ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **21 April 2023** | **09 May 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/006624**

| Patent document cited in search report | | | Publication date (day/month/year) | Patent family member(s) | | | Publication date (day/month/year) |
|---|---|---|---|---|---|---|---|
| WO | 2021/085189 | A1 | 06 May 2021 | EP | 4053180 | A1 | |
| | | | | claims, examples | | | |
| | | | | CN | 114630847 | A | |
| | | | | KR | 10-2022-0070299 | A | |
| WO | 2020/054816 | A1 | 19 March 2020 | EP | 3851464 | A1 | |
| | | | | entire text, all drawings | | | |
| | | | | CN | 112703212 | A | |
| | | | | KR | 10-2021-0052522 | A | |
| JP | 2016-132762 | A | 25 July 2016 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017066351 A

- WO 2020054816 A

**Non-patent literature cited in the description**

- Chemical Society of Japan. Maruzen Publishing Co., Ltd, 30 September 1993, 498-503